(19) **Europäisches Patentamt / European Patent Office / Office européen des brevets**

(11) **EP 4 648 452 A1**

(12) **EUROPEAN PATENT APPLICATION**
published in accordance with Art. 153(4) EPC

(43) Date of publication:
**12.11.2025 Bulletin 2025/46**

(21) Application number: **23914061.9**

(22) Date of filing: **06.01.2023**

(51) International Patent Classification (IPC):
***H04W 12/00*** (2021.01)

(52) Cooperative Patent Classification (CPC):
**H04W 12/00**

(86) International application number:
**PCT/CN2023/070919**

(87) International publication number:
**WO 2024/145903 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **GAN, Lu**
  **Dongguan, Guangdong 523860 (CN)**
- **WANG, Huiming**
  **Dongguan, Guangdong 523860 (CN)**
- **ZHAO, Feifei**
  **Dongguan, Guangdong 523860 (CN)**
- **SHI, Cong**
  **Dongguan, Guangdong 523860 (CN)**

(74) Representative: **Penza, Giancarlo**
**Bugnion S.p.A.**
**Viale Lancetti, 17**
**20158 Milano (IT)**

(54) **COMMUNICATION METHOD, AND DEVICE**

(57) The present application relates to a communication method, a device, a computer-readable storage medium, a computer program product and a computer program. The method comprises: a first device sending an energy supply signal to a third device, wherein a time-domain range of the energy supply signal includes a plurality of time periods, and the energy supply signal is generated from different first parameters in different time periods of the plurality of time periods.

A first device sends an energy supply signal to a third device, wherein a time-domain range of the energy supply signal includes a plurality of time periods, the energy supply signal is generated by different first parameters during different time periods in the plurality of time periods — S410

**FIG. 4**

EP 4 648 452 A1

## Description

TECHNICAL FIELD

The present disclosure relates to the field of communication, and particularly relate to a communication method, a device, a computer-readable storage medium, a computer program product and a computer program.

BACKGROUND

In the related art, the terminal device, particularly the zero power consumption terminal, may have a requirement to report data to the network device. However, in the scenario where the zero power consumption terminal reports data to the network device, how to ensure the security of the data reported by the zero power consumption terminal becomes a problem that needs to be solved.

SUMMARY

The embodiments of the present disclosure provide a communication method, a device, a computer-readable storage medium, a computer program product and a computer program.

The embodiment of the present disclosure provides a communication method, including the following operation.

A first device sends an energy supply signal to a third device, wherein a time-domain range of the energy supply signal includes a plurality of time periods, the energy supply signal is generated by different first parameters during different time periods in the plurality of time periods.

The embodiment of the present disclosure provides a communication method, including the following operations.

A second device receives a first signal sent by a third device.

The second device processes the first signal based on a second signal to obtain data reported by the third device, wherein a duration of the second signal includes a plurality of time periods, the second signal is generated by different second parameters during different time periods in the plurality of time periods.

The embodiment of the present disclosure provides a communication method, including the following operations.

A third device receives an energy supply signal sent by a first device, wherein a time-domain range of the energy supply signal includes a plurality of time periods, the energy supply signal is generated by different first parameters during different time periods in the plurality of time periods.

The third device sends a first signal to a second device, wherein the first signal carries data reported by the third device.

The embodiment of the present disclosure provides a first device, including a first communication unit.

The first communication unit is configured to send an energy supply signal to a third device, wherein a time-domain range of the energy supply signal includes a plurality of time periods, the energy supply signal is generated by different first parameters during different time periods in the plurality of time periods.

The embodiment of the present disclosure provides a second device, including a second communication unit and a second processing unit.

The second communication unit is configured to receive a first signal sent by a third device.

The second processing unit is configured to process the first signal based on a second signal to obtain data reported by the third device, wherein a duration of the second signal includes a plurality of time periods, the second signal is generated by different second parameters during different time periods in the plurality of time periods.

The embodiment of the present disclosure provides a third device, including a third communication unit.

The third communication unit is configured to receive an energy supply signal sent by a first device, wherein a time-domain range of the energy supply signal includes a plurality of time periods, the energy supply signal is generated by different first parameters during different time periods in the plurality of time periods; and send a first signal to a second device, wherein the first signal carries data reported by the third device.

The embodiment of the present disclosure provides a first device including a processor and a memory. The memory is used for storing a computer program, the processor is used for calling and executing the computer program stored in the memory, to cause the first device to perform the above-described method.

The embodiment of the present disclosure provides a second device including a processor and a memory. The memory is used for storing a computer program, the processor is used for calling and executing the computer program stored in the memory, to cause the second device to perform the above-described method.

The embodiment of the present disclosure provides a third device including a processor and a memory. The memory is used for storing a computer program, the processor is used for calling and executing the computer program stored in the memory, to cause the third device to perform the above-described method.

The embodiment of the present disclosure provides a chip for implementing the above-described method.

Specifically, the chip includes a processor for calling and executing a computer program in a memory, to cause a device on which the chip is mounted to perform the above-described method.

The embodiment of the present disclosure provides a computer-readable storage medium, having stored thereon a computer program that, when being run by a device, causes the device to perform the above-described method.

The embodiment of the present disclosure provides a computer program product including computer program instructions that cause a computer to perform the above-described method.

The embodiment of the present disclosure provides a computer program that, when being run on a computer, causes the computer to perform the above-described method.

By adopting the solution provided by the present embodiment, the time-domain range of the energy supply signal sent by the first device includes a plurality of time periods, and the energy supply signal is generated by different second parameters during different time periods, therefore the energy supply signal sent by the first device is a time-varying energy supply signal, so that the eavesdropper cannot analyze the data modulated by the third device onto the energy supply signal because the time-varying regularity of the energy supply signal cannot be obtained, and the security of the data uploaded by the third device is ensured.

BRIEF DESCRIPTION OF THE DRAWINGS

FIG. 1 is a schematic diagram of an application scenario according to an embodiment of the present disclosure.

FIG. 2 is a schematic diagram of a backscatter-based zero power consumption communication system.

FIG. 3 is a schematic scenario diagram of a hybrid zero power consumption communication system based on cellular and/or sidelink communication according to an embodiment of the present disclosure.

FIG. 4 is a schematic flowchart of a communication method according to an embodiment of the present disclosure.

FIG. 5 is a schematic flowchart of a communication method according to another embodiment of the present disclosure.

FIG. 6 is a schematic flowchart of a communication method according to yet another embodiment of the present disclosure.

FIG. 7 to FIG. 8 are schematic diagrams of various exemplary processing flows of the communication method according to an embodiment of the present disclosure.

FIG. 9 is a schematic diagram of an exemplary processing flow for generating an energy supply signal by using an amplitude parameter in a communication method according to an embodiment of the present disclosure.

FIG. 10 is a schematic diagram of a result of a simulation experiment in which an amplitude parameter is used to generate an energy supply signal in a communication method according to an embodiment of the present disclosure.

FIG. 11 is a schematic diagram of an exemplary processing flow for generating an energy supply signal by using a phase parameter in a communication method according to an embodiment of the present disclosure.

FIG. 12 is a schematic diagram of a result of a simulation experiment in which a phase parameter is used to generate an energy supply signal based on a communication method provided by an embodiment of the present disclosure.

FIG. 13 is a schematic diagram of a scene in which an eavesdropper exists in an application scenario of the communication method according to an embodiment of the present disclosure.

FIG. 14 is a schematic block diagram of a first device according to an embodiment of the present disclosure.

FIG. 15 is a schematic block diagram of a second device according to an embodiment of the present disclosure.

FIG. 16 is a schematic block diagram of a third device according to an embodiment of the present disclosure.

FIG. 17 is a schematic block diagram of a third device according to another embodiment of the present disclosure.

FIG. 18 is a schematic block diagram of a communication device according to an embodiment of the present disclosure.

FIG. 19 is a schematic block diagram of a chip according to an embodiment of the present disclosure.

FIG. 20 is a schematic block diagram of a communication system according to an embodiment of the present disclosure.

DETAILED DESCRIPTION

Hereinafter, the technical solutions in the embodiments of the present disclosure will be described with reference to the accompanying drawings in the embodiments of the present disclosure.

The technical solution of the embodiments of the present disclosure may be applied to various communication systems, such as a global system of mobile communication (GSM) system, a code division multiple access (CDMA) system, and a wideband code division multiple access (WCDMA) system, a general packet radio service (GPRS), a long term evolution (LTE) system, an advanced long term evolution (LTE-A) system, a new radio (NR) system, an evolution system of NR system, an LTE-based access to unlicensed spectrum (LTE-U) system, a NR-based access to unlicensed spectrum (NR-U) system, a non-terrestrial networks (NTN) system, a universal mobile telecommunication system (UMTS), a wireless local area networks (WLAN), a wireless fidelity (WiFi), a 5th generation mobile communication technology (5G) system or other communication systems, etc.

Generally, conventional communication systems support a limited number of connections and are easy to implement. However, with the development of communication technology, mobile communication systems will support not only conventional communication, but also, for example, device to device (D2D) communication, machine to machine (M2M) communication, machine type communication (MTC), vehicle to vehicle (V2V) communication, or vehicle to everything (V2X) communication, etc. The embodiments of the present disclosure can also be applied to these communication systems.

In a possible implementation, the communication system in the embodiment of the present disclosure may be applied to a carrier aggregation (CA) scenario, a dual connectivity (DC) scenario, or a standalone (SA) network deployment scenario.

In a possible implementation, the communication system according to the embodiment of the present disclosure may be applied to an unlicensed spectrum, and the unlicensed spectrum may also be considered as a shared spectrum. Alternatively, the communication system in the embodiment of the present disclosure may also be applied to a licensed spectrum, and the licensed spectrum may also be regarded as an unshared spectrum.

The embodiments of the present disclosure describe various embodiments in conjunction with a network device and a terminal device, the terminal device may also be referred to as a user equipment (UE), an access terminal, a subscriber unit, a subscriber station, a mobile station, a mobile platform, a remote station, a remote terminal, a mobile device, a user terminal, a terminal, a wireless communication device, a user agent or a user device, and the like.

The terminal device may be a station (ST) in a WLAN, a cell telephone, a cordless telephone, a session initiation protocol (SIP) telephone, a wireless local loop (WLL) station, a personal digital assistant (PDA) device, a handheld device or a computing device having wireless communication capabilities, other processing device connected to a wireless modem, a vehicle-mounted device, a wearable device, a terminal device in a next generation communication system such as an NR network, or a terminal device in a future evolved public land mobile network (PLMN) network.

In an embodiment of the present disclosure, the terminal device may be deployed on land, including indoor or outdoor, or may be handheld, wearable, or vehicle-mounted. The terminal device may also be deployed on the water (such as ships, etc.), or may also be deployed in the air (e.g. on aircraft, balloons and satellites, etc.).

In an embodiment of the present disclosure, the terminal device may be a mobile phone, a Pad, a computer having a wireless transceiver function, a virtual reality (VR) terminal device, or an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, and the like.

The terminal device may be for example, a wearable device in an embodiment of the present disclosure, however, the terminal device is not limited thereto. The wearable devices can also be called wearable smart devices, which are a general term for applying wearable technology to intelligently design daily wear and develop wearable devices, such as glasses, gloves, watches, clothing and shoes. The wearable devices are portable devices that is worn directly on the body or integrated into the user's clothes or accessories. The wearable devices are not only hardware devices, but also realize powerful functions through software support, data interaction and cloud interaction. The generalized wearable smart devices include, for example, smart watches or smart glasses which have full functions, large size, and can realize complete or partial functions without relying on smart phones, and include for example various smart bracelets and smart jewelry for physical sign monitoring, which only have a certain type of application functions and need to be used in conjunction with other devices such as smart phones.

In an embodiment of the present disclosure, the network device may be a device for communicating with a mobile device, the network device may be an access point (AP) in the WLAN, a base transceiver station (BTS) in the GSM or CDMA, a NodeB (NB) in the WCDMA, an evolutional Node B (eNB or eNodeB) in the LTE, a relay station or an AP, a vehicle-mounted device, a wearable device, a network device (such as next generation NodeB, gNB) in an NR network, a network device in a future evolved PLMN network, or a network device in an NTN network, and the like.

The network device may have mobile characteristics in embodiments of the present disclosure, and the network device may be for example, but is not limited to a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may be a base station located on a land, a water area and the like.

In an embodiment of the present disclosure, the network device may provide services for the cell, the terminal device communicates with the network device through transmission resources (e.g., frequency domain resources, or spectrum resources) used by the cell, the cell may be a cell corresponding to the network device (e.g., base station), and the cell may belong to a macro base station or a base station corresponding to a small cell, the small cell may include a metro cell, a micro cell, a pico cell, a femto cell, and the like. These small cells have the characteristics of small coverage and low transmission power, and are suitable for providing high-speed data transmission services.

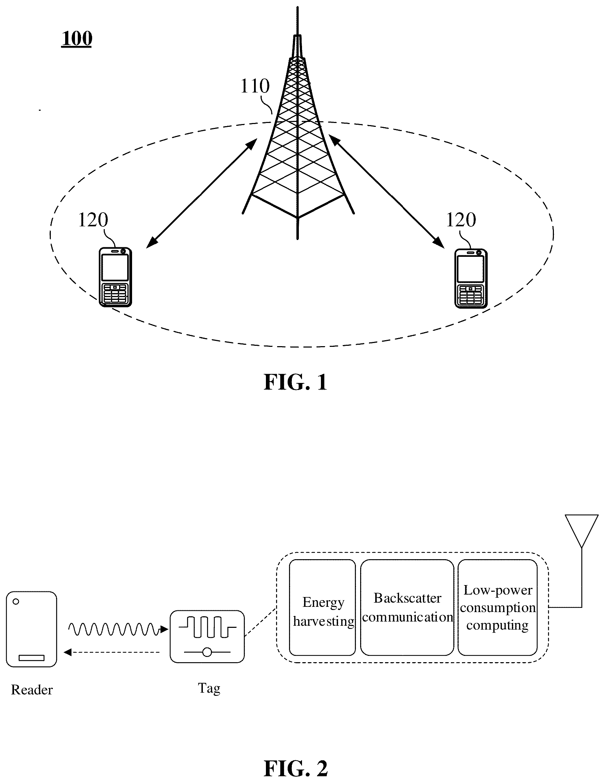

FIG. 1 exemplarily illustrates a communication system 100. The communication system includes a network device 110 and two terminal devices 120. In a possible implementation, the communication system 100 may include multiple network devices 110, and the coverage range of each network device 110 may include another number of terminal devices 120, which is not limited in the embodiment of the present disclosure.

In a possible implementation, the communication system 100 may further include other network entities such as a mobility management entity (MME), an access and mobility management function (AMF), and the like, which is not limited in the embodiment of the present disclosure.

The network device may further include an access network device and a core network device. That is, the wireless communication system further includes multiple core networks for communicating with the access network devices. The access network device may be an evolutional node B (referred to as eNB or e-NodeB) macro base station, a micro base station (also referred to as a "small base station"), a pico base station, an access point (AP), a transmission point (TP) or a new generation Node B (gNodeB) and the like in a long-term evolution (LTE) system, a next radio (NR) system or an authorized auxiliary access long-term evolution (LAA-LTE) system.

It should be understood that a device having a communication function in the network/system in the embodiment of the present disclosure may be referred to as a communication device. Taking the communication system illustrated in FIG. 1 as an example, the communication device may include a network device and a terminal device having a communication function, and the network device and the terminal device may be specific devices in the embodiment of the present disclosure, which is not described herein. The communication device may also include other devices in the communication system, for example other network entities such as a network controller and a mobility management entity, which is not limited in the embodiments of the present disclosure.

In order to facilitate understanding of the embodiments of the present disclosure, basic flows and basic concepts related to the embodiments of the present disclosure will be briefly described below. It should be understood that the basic flows and basic concepts described below do not limit the embodiments of the present disclosure.

Internet of things (IoT) scenarios may encounter extreme environments such as high temperature, extremely low temperature, high humidity, high pressure, high radiation or high-speed movement, such as ultra-high voltage power stations, monitoring of high-speed train tracks, environmental monitoring in alpine zones, industrial production lines, etc. In these scenarios, IoT terminals will not work due to the working environment limitations of conventional power supplies. In addition, extreme working environments are not conducive to the maintenance of IoT, such as battery replacement. Some IoT communication scenarios, such as food traceability, commodity circulation and smart wearables, require terminals to have extremely small sizes to facilitate use in these IoT communication scenarios. For example, IoT terminals used for commodity management in the circulation link usually use the form of electronic tags and are embedded into the commodity packaging in a very compact form. For another example, lightweight wearable devices can improve user experience while meeting user needs. Numerous IoT communication scenarios require the cost of IoT terminals to be low enough to improve the competitiveness relative to other alternative technologies. For example, in logistics or warehousing scenarios, in order to facilitate the management of a large number of circulating items, the IoT terminals can be attached to each item, so as to complete the accurate management of the entire logistics process and cycle through the communication between the terminal and the logistics network. These scenarios require the price of IoT terminals to be competitive enough.

The zero power consumption communication network is a kind of wireless communication technology suitable for short distance and low speed. The zero power consumption device mainly combines the radio frequency energy harvesting technology, the backscatter technology and the low-power consumption computing technology to realize the advantage of device nodes not carrying a power supply. The basic architecture of the zero power consumption system is illustrated in FIG. 2, including a reader and a tag. The tag can have functions such as energy harvesting, backscatter communication and low-power consumption computing. The tag is a type of zero power consumption terminal, and it should be understood that the zero power consumption terminal may be a tag or an ordinary device in an actual scenario, and which is not limited here.

The outstanding technical advantage of zero power consumption communication is battery-free communication. Due to the use of key technologies such as the radio frequency energy harvesting, the backscatter and the low-power consumption computing, the terminal can be battery-free and support extremely low hardware complexity. Therefore, the zero power consumption communication can meet the requirements of ultra-low power consumption, extremely small size and extremely low cost. It is foreseeable that the zero power consumption technology will have significant application advantages in a wide range of application fields. For example, applications such as industrial sensor networks, intelligent transportation, smart logistics, intelligent warehousing, smart agriculture, smart cities and energy fields for vertical industries, as well as applications in scenarios such as smart wearable, smart home and medical care for individual consumers. In this section, we will select some typical scenarios to illustrate the application potential of zero power consumption communication in these fields.

When the reader is a network device, its requirements (or characteristics) are as follows.

Basic setup and flexible deployment based on cellular network: for example, it can be deployed at outdoor pole stations and deployed indoors at the same interval as the digital indoor system (DIS) stations to provide basic coverage; for another example, blind zone filling or extended coverage can be deployed as needed;

Coverage requirements: the coverage distance requirement of a single station is greater than 30 m indoors and 100 m outdoors;
Network security: authorization-based tag reading to protect privacy and data security;
Connection requirements: support sufficient system capacity and support data reading from a large number of terminals.
The characteristics of the zero power consumption terminal, the zero power consumption device or the zero power consumption IoT terminals include but are not limited to the following contents.

Power consumption: it can be less than 1 mw, passive, battery-free and maintenance-free;

Working environment: it needs to be able to match special environments, such as working normally in special environments such as high temperature, high pressure, extreme cold and radiation;
Volume: it is extremely small and is convenient for large-scale application;
Communication distance: it can reach a range of tens of meters to hundreds of meters;
Material Type: it can have a paper tag and anti-metal tag.

It should be understood that the foregoing has only been described in terms of the application scenario of the industrial sensor network, and other requirements may be included in the application scenario of the industrial sensor network, but the description is not exhaustive here. In addition, in other application scenarios, there will be differences from the requirements of the aforementioned industrial sensor networks. For example, in the application scenarios of smart logistics and intelligent warehousing, connection requirements may also be increased (due to the large number of goods, a large number of tags need to be detected at the same time, so thousands of connections per second may need to be achieved). For another example, in the application scenario of smart home, the demand for communication delay may increase (smart home appliance adjustment: ten milliseconds to hundreds of milliseconds; home positioning: hundreds of milliseconds to seconds), and the demand for excitation signals (using indoor smart devices such as smart phones, customer premise equipment (CPE), WIFI signals as energy excitation signals for passive terminals, without additional excitation signals and simplifying network layout), etc., which will not be exhaustive here.

In a backscatter-based zero power consumption communication system, a zero power consumption device backscatters a received radio frequency (RF) signal that is modulated and reflected by a transmitter, to transmit data, instead of generating the RF signal itself. This technology has been widely used in practical production, such as a radio frequency identification (RFID), a tracking device, a remote switch, a medical telemetry and a low-cost sensor network.

Specifically, the zero power consumption terminal has three main modules, namely energy harvesting, backscatter and low-power consumption calculation.

The energy harvesting can also be called radio frequency energy harvesting, its core is to convert radio frequency energy into direct current. The energy can be stored in batteries or capacitors, or it can be directly used to drive logic circuits, digital chips or sensor devices after harvesting, to complete functions and applications such as modulation and transmission of backscatter signals, collection and processing of sensor information, etc. The basic principle of radio frequency energy harvesting is to collect space electromagnetic wave energy through electromagnetic induction. The essence of radio frequency energy harvesting is to convert radio frequency energy into direct current voltage. When applied to the zero power consumption communication, the core requirement of radio frequency energy harvesting is to effectively use the collected energy to drive load circuits (low-power computing, sensors, etc.) to achieve battery-free communication.

The backscatter technology is a wireless technology that realizes signal transmission and encoding without active transmitter. Similar to the principle of radar, part of the electromagnetic wave will be reflected when it reaches the surface of an object, and the strength of the reflected signal depends on the shape, material and distance of the object. From the perspective of radar, each object has its own radar cross-section, and the tag modulates the reflected signal by changing its radar cross-section. The backscatter transmitter modulates the received radio frequency signal to transmit data without having to generate the radio frequency signal itself. For example, a backscatter tag is a zero power consumption terminal, the backscatter reader sends the radio frequency signal to the backscatter tag through a carrier wave by transmitter (TX) and amplifier (AMP). After the backscatter tag receives the carrier wave, it obtains energy through its energy harvesting function, drives its own logic processing module through the energy, and then sends the data to be transmitted to the backscatter reader through the reflected signal. The reflection scattering reader receives the data through a low noise amplifier (LNA) and a receiver (RX).

The conversion efficiency of radio frequency energy is often less than 10%, which leads to the power consumption requirements for driving digital logic circuits or chips for calculation cannot be too high. Although with the improvement of the process and the optimization of the design have been enhanced, the number of calculations per microjoule energy can be used increases, but it still can't meet the complex calculations.

With the development of 5G systems, there is a need for 5G systems to support zero power consumption terminals to access the network in 3GPP standards. The main scenarios for zero power consumption terminal access to the network have the following characteristics: the environment is extreme and not suitable for ordinary terminal work, terminals that use very low power consumption and cost, and battery-free terminal. The zero power consumption communication systems can be used in wireless industrial induction networks, smart agriculture, smart warehousing and logistics, smart homes and other scenarios. The zero power consumption terminal can directly access the base station, or access to the base station through a relay device. The former is called direct mode and the latter is called indirect mode.

Based on the energy source and usage mode of the zero power consumption terminal, the zero power consumption terminal can be classified into a passive zero power consumption terminal, a semi-passive zero power consumption terminal and an active zero power consumption terminal.

1) The passive zero power consumption terminal does not need an internal battery. When the passive zero power consumption terminal is close to the network equipment (such as the reader of the radio frequency identification (RFID) system), the passive zero power consumption terminal is in the near-field range formed by the antenna radiation of the network device. Therefore, the passive zero power consumption terminal antenna generates an induced current through electromagnetic induction, and the induced current drives the low-power chip circuit of the zero power consumption terminal. The demodulation of forward link signals and the modulation of backward link signals, etc are realized. For backscatter links, passive zero power consumption terminals use the backscatter implementation to transmit signals.

It can be seen that the passive zero power consumption terminal does not need an internal battery to drive neither the forward link nor the reverse link, and is a true zero power consumption terminal. The passive zero power consumption terminals do not require batteries, the radio frequency circuits and the baseband circuits are very simple, for example, they do not require a LNA , a power amplifier (PA), a crystal oscillator, a digital-to-analog converter (ADC) and other devices, therefore they have many advantages such as small size, light weight, very low price and long service life. The characteristics of the passive zero power consumption terminal may also be: no battery, obtain energy from the surrounding environment (such as radio waves, solar energy, wind energy, mechanical kinetic energy, etc.); no universal subscriber identity module (USIM). A certain amount of energy can also be stored through the surrounding environment, but the energy is very small, therefore the supported functional logic is much less than that of ordinary mobile phone terminals.

2) The semi-passive zero power consumption terminal itself is not equipped with a conventional battery, but can use an RF energy harvesting module to collect radio wave energy, and store the collected energy in an energy storage unit (such as a capacitor). After obtaining energy, the energy storage unit can drive the low-power chip circuit of the semi-passive zero power consumption terminal to achieve the demodulation of the forward link signal and the modulation of the backward link signal. For the backscatter link, the semi-passive zero power consumption terminal uses the backscatter implementation for the transmission of the signal.

It can be seen that the semi-passive zero power consumption terminal does not need an internal battery to drive neither the forward link nor the reverse link. Although the energy stored by the capacitor is used in operation, the energy comes from the radio energy collected by the energy harvesting module, therefore it is also a real zero power consumption terminal. The semi-passive zero power consumption terminal inherits many advantages of the passive zero power consumption terminal, therefore it has many advantages such as small size, light weight, very low price and long service life.

3) The zero power consumption terminals used in some scenarios can also be the active zero power consumption terminals, such terminals can have internal batteries. The battery is used to drive the low power consumption chip circuit of the active zero power consumption terminal, and realizes the demodulation of the forward link signal and the modulation of the backward link signal. However, for the backscatter link, the active zero power consumption terminal uses the backscatter implementation for the transmission of the signal. Therefore, the zero power consumption of this type of terminal is mainly reflected in the fact that the signal transmission of the reverse link does not require the terminal's own power, but uses the backscatter method. In the active zero power consumption terminal, internal battery supplies power to RFID chip to increase the reading and writing distance of tags and improve the reliability of communication. Therefore, it can be applied in some scenarios where there are relatively high requirements for communication distance, reading delay, etc.

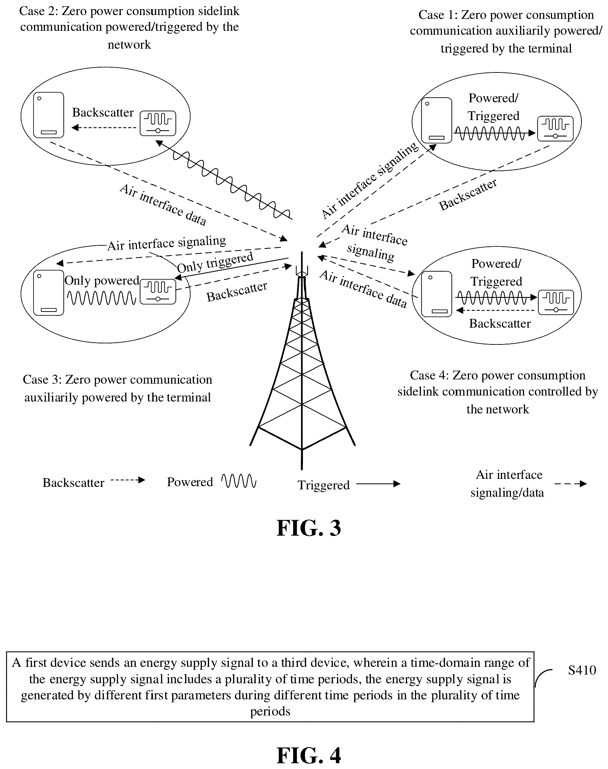

With reference to FIG. 3, different cases of a hybrid zero power consumption communication system based on cellular and/or sidelink communication are described in detail.

In case 1, the zero power consumption communication auxiliarily powered and triggered by the intelligent terminal: the zero power consumption terminal is powered and triggered by intelligent terminals in the network, and the backscatter signal of the zero power consumption terminal is received by the base station. The energy supply, the trigger energy supply and the trigger operation of the intelligent terminal can be controlled by the base station through air interface signaling. In this case, the intelligent terminal may be the third device, and the intelligent terminal may be replaced with an auxiliary base station. That is, the third device sends a trigger signal to the zero power consumption terminal to activate and supply for the zero power consumption terminal. Furthermore, the zero power consumption terminal may transmit data to the base station.

In case 2, the zero power consumption sidelink communication powered/triggered by the network: the base station provides wireless energy supply and sends trigger signaling to the zero power consumption terminal, and the backscatter signal of the zero power consumption terminal is received by the intelligent terminal, and the sidelink communication completed. Further, the intelligent terminal transmits air interface data to the base station.

In case 3, the zero power communication auxiliarily powered by the intelligent terminal: the intelligent terminal in the network provides an auxiliary energy supply to the zero power consumption terminal, the base station sends trigger information to the zero power consumption terminal and receives backscatter signals from the zero power consumption terminal. The auxiliary energy supply process of the intelligent terminal for the zero power consumption terminal can be controlled by the base station through air interface signaling.

In case 4, the zero power consumption sidelink communication controlled by the network: the intelligent terminal receives the air interface signaling and data of the network. The intelligent terminal supplies energy and triggers the zero power consumption terminal, and receives the backscatter signal of the zero power consumption terminal to complete the sidelink communication.

At present, there is no scheme to prevent eavesdropping of uplink signals for zero power consumption communication systems that mix cellular and sidelink communications. In the related art, related solutions for preventing eavesdropping in a scenario in which a user terminal (UE) and a zero power consumption device directly communicate bidirectionally may include, for example, a key-based secure transmission method and an artificial noise-based secure transmission method. The key-based secure transmission method may be that the user terminal and the zero power consumption device interact to generate a physical layer key by using some physical layer characteristics (signal strength, etc.), or generate a key by using some lightweight key generation method (such as a lightweight security suite in the RFID protocol). The zero power consumption device key ultimately uses the key to encrypt and transmit information. The artificial noise-based secure transmission method may be that the user terminal transmits some artificial noise to interfere with the information of the zero power consumption device received by the eavesdropper, but since the user terminal knows the artificial noise itself, the influence of the noise can be eliminated by denoising.

However, in the key-based secure transmission method, the zero power consumption device still needs to perform some necessary calculations, such as estimating signal strength and performing some mathematical operations such as XOR. In short, it will increase the overhead of the zero power consumption device. At the same time, any key generation method requires the user terminal and the zero power consumption device to interact with each other. However, in the zero power consumption communication system that mix cellular and sidelink communications, the communication link is unidirectional, and the zero power consumption device cannot interact with other devices, so the key cannot be generated.

For the artificial noise-based secure transmission method, the introduction of artificial noise will not only affect its own communication link, but also deteriorate other communication in the broadcast environment, so it is not friendly to cellular network, and it is not suitable for zero power communication system that mix cellular and sidelink communication. At the same time, randomly generating artificial noise also requires additional overhead.

It should be understood that the terms "system" and "network" herein are often used interchangeably herein. Herein, the term "and/or" herein is only an association relationship describing association objects, and means that there may be three relationships. For example, A and/or B may mean that A alone exists, A and B simultaneously exist, and B alone exists. In addition, the character "/" herein generally indicates that the related objects before and after are in an "or" relationship.

It should be understood that the "indication" mentioned in the embodiments of the present disclosure may be a direct indication, an indirect indication, or an associated relationship. For example, A indicating B may mean that A directly indicates B, for example, B can be acquired by A, and may also mean that A indicates B indirectly, for example A indicates C, and B can be acquired through C, and may also indicate that there is an association relationship between A and B.

In the description of the embodiments of the present disclosure, the term "correspondence" may indicate that there is a direct correspondence or indirect correspondence between the two objects, there is an association relationship between the two objects, or there is a relationship between indicating and being indicated, configuring and being configured, and the like.

In order to facilitate understanding of the technical solutions of the embodiments of the present disclosure, the related technologies of the embodiments of the present disclosure are be described below, and the related technologies below may be, as optional solutions, arbitrarily combined with the technical solutions of the embodiments of the present disclosure, and all of them belong to the scope of protection of the embodiments of the present disclosure.

FIG. 4 is a schematic flowchart of a communication method according to an embodiment of the present disclosure. The method includes at least part of operation S410.

At S410, a first device sends an energy supply signal to a third device, wherein a time-domain range of the energy supply signal includes a plurality of time periods, the energy supply signal is generated by different first parameters during different time periods in the plurality of time periods.

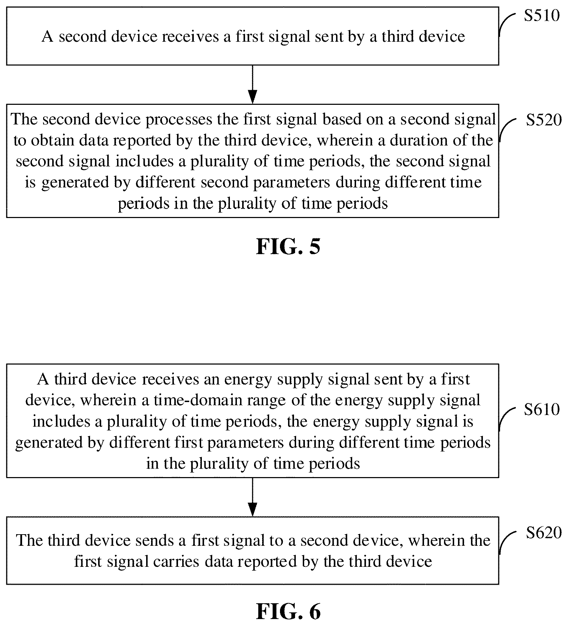

FIG. 5 is a schematic flowchart of a communication method according to another embodiment of the present disclosure. The method includes at least part of the following operations.

At S510, a second device receives a first signal sent by a third device;

At S520, the second device processes the first signal based on a second signal to obtain data reported by the third device, wherein a duration of the second signal includes a plurality of time periods, the second signal is generated by different second parameters during different time periods in the plurality of time periods.

FIG. 6 is a schematic flowchart of a communication method according to another embodiment of the present disclosure. The method includes at least part of the following operations.

At S610, a third device receives an energy supply signal sent by a first device, wherein a time-domain range of the energy supply signal includes a plurality of time periods, the energy supply signal is generated by different first parameters during different time periods in the plurality of time periods;

At S620, the third device sends a first signal to a second device, wherein the first signal carries data reported by the third device.

The third device may be a zero power consumption terminal. The first device may be a terminal device, such as a UE, or another type of terminal device, which is not exhaustive here. The second device may be a network device. The network device may be an access network device in particular. Alternatively, the network device may be a wireless access point (AP).

It should be noted that the above description of the first device, the second device and the third device is applicable to the communication method according to any one of the embodiments corresponding to FIG. 4 to FIG. 6.

In some possible embodiments, before sending the energy supply signal to the third device, the first device may perform the following processing: determining a time-domain range of the energy supply signal, determining a duration of the energy supply signal, and determining a duration of each of the plurality of time periods included in the time-domain range.

The duration of the energy supply signal may be preset, or may be determined by the first device. If the duration of the energy supply signal is preset, it may mean that the duration of the energy supply signal is specified in a protocol, or is set in advance by the second device for the first device, or is set in advance by other network devices for the first device. If the duration of the energy supply signal is determined by the first device, the duration of the energy supply signal may be determined by the first device based on any one of its own processing resources, capability information, or remaining power, and the like. For example, when the remaining power of the first device exceeds a preset threshold value, the first duration may be used as the duration, and when the remaining power of the first device is less than or equal to the preset threshold value, the second duration may be used as the duration, and the first time is longer than the second time.

The time-domain range of the energy supply signal may be determined according to the starting transmission time of the energy supply signal and the duration of the energy supply signal. For example, after the starting transmission time of the energy supply signal is determined, the starting transmission time and the end transmission time of the energy supply signal can be determined in combination with the duration of the energy supply signal, and the time-domain range between the starting transmission time (including the starting transmission time) and the end transmission time (including the end transmission time) is the time-domain range of the energy supply signal.

The starting transmission time of the energy supply signal may be determined by the first device.

Exemplarily, the starting transmission time of the energy supply signal may be determined by the first device based on the configuration information. The configuration information may include a plurality of optional transmission times. Accordingly, when the current time reaches one of the plurality of optional transmission times, the first device starts transmitting the energy supply signal by using the current time as the starting transmission time. The configuration information may be configured by the second device, or the configuration information may be preset, or the configuration information may be configured by other network devices other than the second device, and the present embodiment does not limit the acquisition method of the configuration information.

Exemplarily, the starting transmission time of the energy supply signal may be determined by the first device based on the first indication information of the second device. For example, the first indication information may include a first time value, and accordingly, the first device uses the first time value as the starting transmission time of the energy supply signal. For another example, the first indication information is only used to instruct the first device to send the energy supply signal, and at this time, the first device may set the reception time of the first indication information as the starting transmission time of the energy supply signal.

In some possible embodiments, the time-domain range of the aforementioned energy supply signal includes a plurality of time periods, that is, the duration of the energy supply signal includes a plurality of time periods. In two adjacent time periods in the plurality of time periods, an end time of the preceding time period and a starting time of the next time period are the same. In the plurality of time periods, the duration of each time period is preset, or determined by the second device, or determined by the first device. As long as the duration of each of the plurality of time periods used by the first device and the second device is the same, it is within the protection scope of the present embodiment.

Optionally, the duration of each of the plurality of time periods is related to a reciprocal of an information modulation rate of the third device in case that the duration of each of the plurality of time periods is preset. In this case, among the plurality of time periods, the durations of different time periods are the same.

Exemplarily, the duration of each of the plurality of time periods may be equal to the reciprocal of the information modulation rate of the third device. For example, the information modulation rate of the third device is expressed as $f_{tag}$, accordingly, the duration of each of the plurality of time periods may be equal to $1/f_{tag}$.

Exemplarily, the duration of each of the plurality of time periods may be equal to a first multiple of the reciprocal of the information modulation rate of the third device. For example, the first multiple may be expressed as a, a being a positive number, and in a preferred example a being a positive integer greater than or equal to 2. The information modulation rate of the third device is expressed as $f_{tag}$; accordingly, the duration of each of the plurality of time periods may be equal to $a(1/f_{tag})$.

The first multiple may be preset, or determined by the first device, or determined by the second device. As long as the first multiple used by the first device and the first multiple used by the second device are the same, it is within the protection scope of the present embodiment. For example, the first multiple may be the same multiple value configured for the first device and the second device, respectively. For another example, the first multiple may be determined by the second device according to the actual situation, and then sent by the second device to the first device through the seventh indication information. Accordingly, the first device receives the seventh indication information sent by the second device, and obtains the first multiple from the seventh indication information. For another example, the first multiple may be determined by the first device according to the actual situation, and then sent by the first device to the second device through the eighth indication information. Accordingly, the second device receives the eighth indication information sent by the first device, and obtains the first multiple from the eighth indication information. The seventh indication information may be carried by any one of: a radio resource control (RRC) message, a medium access control (MAC) control element (CE), a downlink control information (DCI), or a system broadcast message, and the like. The eighth indication information may be carried by any one of: an RRC message, a MAC CE, or an uplink control information (UCI), and the like.

Optionally, in case that the duration of each of the plurality of time periods is determined by the second device, before the first device sends the energy supply signal to the third device, the method further includes that: the first device receives a fifth indication information sent by the second device, and the fifth indication information is used to determine the duration of each of the plurality of time periods. Accordingly, in a case that the duration of each of the plurality of time periods is determined by the second device, before the second device receives the first signal sent by the third device, the method further includes that: the second device sends a fifth indication information to the first device, and the fifth indication information is used to determine the duration of each of the plurality of time periods. In this case, among the plurality of time periods, the durations of different time periods are the same, or the durations of different time periods are different.

The fifth indication information may be carried by a downlink message, for example, may be any one of: an RRC message, a MAC CE, a DCI, or a system broadcast message, and the like.

In a preferred example, the manner in which the second device determines the duration of each of the plurality of time periods may be determined by the second device based on the reciprocal of the information modulation rate of the third device. For example, the second device may determine that the duration of each of the plurality of time periods is equal to the reciprocal of the information modulation rate of the third device. For another example, the second device may determine that the duration of each of the plurality of time periods is equal to a first multiple of the reciprocal of the information modulation rate of the third device. For another example, the second device may determine that the duration of each of the plurality of time periods is configured by a preset rule, for example, the preset rule is that the duration of the first duration is equal to the reciprocal of the information modulation rate of the third device, the duration of the second duration is equal to the first multiple of the reciprocal of the information modulation rate of the third device, the duration of the third time period is equal to the reciprocal of the information modulation rate of the third device, and the duration of the fourth time period is equal to the first multiple of the reciprocal of the information modulation rate of the third device. The description of the first multiple is the same as that of the aforementioned embodiment, and will not be repeated.

In other examples, the manner in which the second device determines the duration of each of the plurality of time periods may be determined by the second device based on parameters other than the information modulation rate of the third device. For example, the second device may configure the duration of each time period according to its own needs, may configure the durations of different time periods to be the same, and/or may configure the durations of different time periods to be different.

It should be understood that this is merely an exemplary description, and the manner in which the second device determines the duration of each of the plurality of time periods may not be limited to the above examples, but is not exhaustive.

Optionally, in case that the duration of each of the plurality of time periods is determined by the first device, before the first device sends the energy supply signal to the third device, the method further includes that: the first device sends a sixth indication information to the second device, and the sixth indication information is used to determine the duration of each of the plurality of time periods. Accordingly, in case that the duration of each of the plurality of time periods is determined by the first device, before the second device receives the first signal sent by the third device, the method further includes that: the second device receives a sixth indication information sent by the first device, and the sixth indication information is used to determine the duration of each of the plurality of time periods. In this case, among the plurality of time periods, the durations of different time periods are the same, or the durations of different time periods are different.

The sixth indication information may be carried by an uplink message, for example, may be any one of: an RRC message, a MAC CE, or a UCI, and the like.

The manner in which the first device determines the duration of each of the plurality of time periods is similar to the manner in which the second device provided in the foregoing embodiment determines the duration of each of the plurality of time periods, and thus repeated description thereof will not be made.

In some possible implementations, the first device and the second device need to pre-configure or pre-determine a plurality of candidate generation parameters. The plurality of candidate generation parameters are a plurality of candidate amplitude parameters or a plurality of candidate phase parameters. The plurality of candidate generation parameters are preset, or determined by the second device, or determined by the first device.

Optionally, in case that the plurality of candidate generation parameters are preset, the plurality of candidate generation parameters may be preset in the first device and the second device, respectively, that is, the first device and the second device are the same preset plurality of candidate generation parameters. The same plurality of candidate generation parameters that are both preset by the first device and the second device may mean that among the plurality of candidate generation parameters respectively preset by the first device and the second device, the values of the candidate generation parameters at the same position are the same.

Optionally, in case that the plurality of candidate generation parameters are determined by the second device, before the second device receives the first signal sent by the third device, the method further includes that: the second device sends a third indication information to the first device, and the third indication information carries the plurality of candidate generation parameters. Accordingly, in case that the plurality of candidate generation parameters are determined by the second device, before the first device sends the energy supply signal to the third device, the method further includes that: the first device receives a third indication information sent by the second device, and the third indication information carries the plurality of candidate generation parameters.

The third indication information may be carried by a downlink message, and may be, for example, any one of: an RRC message, a MAC CE, a DCI, or a system broadcast message, and the like.

A manner in which the second device determines the plurality of candidate generation parameters may be generated by using a random number generator, or it may be generated by a random number generator when a minimum value and a maximum value are defined. Alternatively, each candidate generation parameter may be manually selected and the position of each candidate generation parameter may be determined, and the specific manner of manual processing is not limited here. It should be understood that this is merely an exemplary description, and the manner in which the second device determines the plurality of candidate generation parameters may not be limited to the above example, but is not exhaustive.

Optionally, in case that the plurality of candidate generation parameters are determined by the first device, before the first device sends the energy supply signal to the third device, the method further includes that: the first device sends a fourth indication information to the second device, and the fourth indication information carries the plurality of candidate generation parameters. Accordingly, in case that the plurality of candidate generation parameters are determined by the first device, before the second device receives the first signal sent by the third device, the method further includes that: the second device receives a fourth indication information sent by the first device, and the fourth indication information carries the plurality of candidate generation parameters.

The fourth indication information may be carried by an uplink message, for example, may be any one of: an RRC message, a MAC CE, or UCI, and the like.

Since the manner in which the first device determines the plurality of candidate generation parameters is similar to the manner in which the second device provided in the foregoing embodiment determines the plurality of candidate generation parameters, the description thereof will not be repeated.

In some possible implementations, before the first device sends the energy supply signal to the third device, the method may further include: determining a first parameter of the energy supply signal in each of the plurality of time periods based on the plurality of candidate generation parameters, and generating the energy supply signal based on the first parameter in each of the plurality of time periods.

The energy supply signal is generated by an i-th first parameter within an i-th time period in the plurality of time periods, the i-th first parameter is one of a plurality of candidate generation parameters; and i is a positive integer.

The i-th time period may be any one of the plurality of time periods, and the processing of each of the plurality of time periods will not be described in detail. It should be noted that the first parameters during different time periods in the plurality of time periods may be different, that is, the first parameters in different time periods may be different candidate generation parameters in the plurality of candidate generation parameters.

The energy supply signal within a time period may be referred to as an energy supply signal segment, or an energy supply signal sub-portion, or a partial energy supply signal, and the like, that is, the energy supply signal may be included in a plurality of time periods within a time-domain range (i.e., a duration), each of which is an energy supply signal segment (or an energy supply signal sub-portion, or a partial energy supply signal). Hereinafter, for the sake of brevity of description, as long as it relates to the case where the energy supply signal is in any one time period, it is referred to as the energy supply signal segment in any one time period.

In some possible embodiments, the operations by the first device of determining the first parameter of the energy supply signal in each of the plurality of time periods based on the plurality of candidate generation parameters, and generating the energy supply signal based on the first parameter of each time period may specifically include: determining a first parameter of the energy supply signal in each of the plurality of time periods based on the ranking in the plurality of candidate generation parameters; and generating a energy supply signal based on the first parameter in each of the plurality of time periods.

The i-th first parameter is an i-th candidate generation parameter in the plurality of candidate generation parameters. The i-th first parameter specifically refers to a first parameter used in the i-th time period or a first parameter corresponding to the i-th time period.

The plurality of candidate generation parameters may be in the form of a set, for example, the plurality of candidate generation parameters may be a plurality of candidate generation parameters included in a discrete set. For example, the discrete set is represented as $\Phi$, the plurality of candidate generation parameters are represented as $\{\phi_1, \phi_2, \cdots \phi_N\}$, N is an integer greater than or equal to 2, and N represents the number of candidate generation parameters.

The plurality of candidate generation parameters may be ranked, and the aforementioned i-th candidate generation parameter may refer to a candidate generation parameter whose ranking position is the i-th position among the plurality of candidate generation parameters, that is, in the i-th time period of the energy supply signal, the method of determining the i-th first parameter may be that the first device selects the candidate generation parameter at the i-th position from the plurality of candidate generation parameters as the i-th first parameter. Still taking the discrete set as an example, the discrete set $\Phi$ contains N candidate generation parameters arranged in order, the candidate generation parameter $\phi_i$ at the i-th position among the N candidate generation parameters is taken as the aforementioned i-th first parameter.

In a preferred example, the number of the plurality of candidate generation parameters is greater than or equal to the number of the plurality of time periods. That is, among a plurality of time periods within the time-domain range of one energy supply signal, the first parameters of different time periods are selected from different positions in the plurality of candidate generation parameters. In some other examples, the number of the plurality of candidate generation parameters may be less than the number of the plurality of time periods, and in such examples, the plurality of candidate generation parameters may be spliced in an end to end form until the total number of obtained candidate generation parameters is greater than or equal to the number of the plurality of time periods. For example, the discrete sets $\Phi$ contains 10 candidate generation parameters (that is, N is equal to 10), and the number of multiple time periods is 15. The 10 candidate generation parameters can be spliced end to end to form 20 candidate generation parameters. Furthermore, the i-th first parameter is determined in the same manner as described above, and will not be described in detail.

Exemplarily, when changing the first parameter of the energy supply signal for the i-th time, the first device may select a candidate generation parameter whose ranking position is the i-th position from the discrete set $\Phi$ as the i-th first parameter, and then generate an energy supply signal segment within the i-th time period based on the i-th first parameter, and so on, until the energy supply signal segment in each of the all time periods is obtained, and finally the energy supply signal $f_1(t)$ is obtained.

In some possible embodiments, the operations by the first device of determining a first parameter of the energy supply signal in each of the plurality of time periods based on the plurality of candidate generation parameters, and generating an energy supply signal based on the first parameter in each of the plurality of time periods may specifically include that: the first device determines a first parameter in each of the plurality of time periods from the plurality of candidate generation parameters based on each selection indication value among the plurality of selection indication values, and generates an energy supply signal based on the first parameter in each of the plurality of time periods.

The i-th first parameter is determined from the plurality of candidate generation parameters based on the i-th selection indication value in the plurality of selection indication values. The i-th selection indication value is a positive integer less than or equal to a number of the plurality of candidate generation parameters.

The i-th selection indication value is used to indicate a target ranking position. The i-th first parameter is a candidate generation parameter located at the target ranking position in the plurality of candidate generation parameters.

In this embodiment, the operation by the first device of determining the first parameter in each of the plurality of time periods from the plurality of candidate generation parameters based on each selection indication value among the plurality of selection indication values, may include that: the first device determines a target ranking position based on the i-th selection indication value among the plurality of selection indication values in the i-th time period of the time-domain range of the energy supply signal, and determines one candidate generation parameter located at the target ranking position from the plurality of candidate generation parameters as the i-th first parameter.

In the foregoing embodiments, a plurality of candidate generation parameters have been described in detail, and the description will not be repeated here.

In the present embodiment, a plurality of selection indication values are also ranked. The plurality of selection indication values may be a plurality of selection indication values included in an indication value sequence, and of course, the plurality of selection indication values may be in a set form. Exemplarily, the indication value sequence can be expressed as $k$, $k = [k_1, k_2, \cdots, k_Q]$, Q is an integer greater than or equal to 2, Q represents the number of selection indication values, that is, the plurality of selection indication values are specifically Q selection indication values. In the indication value sequence $k$, the Q selection indication values are arranged in order, the selection indication value arranged at the i-th position among the Q selection indication values is taken as the i-th selection indication value (i.e., $k_i$). Any one of the selection indication values is greater than or equal to 1 and less than or equal to the number of the plurality of candidate generation parameters.

In a preferred example, the number (i.e., Q) of aforementioned selection indication values may be greater than or equal to the number of aforementioned plurality of time periods. That is, among a plurality of time periods within the time-domain range of one energy supply signal, the first parameters of different time periods are selected from the plurality of candidate generation parameters based on the target ranking positions indicated by different selection indication values. For example, assuming N is equal to 5, the number of multiple time periods is 20, Q is equal to 20, and i is equal to 6, if $k_6$ = 2, it indicates that the target ranking position indicated by the sixth selection indication value is 2, and the sixth first parameter (that is, the first parameter used in the sixth time period) is the candidate generation parameter $\phi_2$ processed at the second ranking position among the five candidate generation parameters.

In some other examples, the number (i.e., Q) of the aforementioned selection indication values may be less than the number of the aforementioned plurality of time periods. In such an example, the plurality of selection indication values may be spliced in an end to end manner until the total number of obtained selection indication values is greater than or equal to the number of the plurality of time periods. For example, the indication value sequence $k$ contains 10 selection indication values (that is, Q is equal to 10), and the number of multiple time periods is 18, the 10 selection indication values can be spliced end to end to form 20 selection indication values. Furthermore, the i-th selection indication value is determined in the same manner as described above, and then the i-th first parameter is determined, which is not described in detail.

Exemplarily, when changing the first parameter of the energy supply signal for the i-th time, the first device selects the selection indicator value at the i-th position from the indication value sequence $k$ as the i-th selection indication value. According to target ranking position indicated by the i-th selection indication value, the first device selects the candidate generation parameters whose ranking position is the target ranking position indicated from the discrete set $\Phi$, as the i-th first parameter. The first device generates an energy supply signal segment within the i-th time period based on the i-th first parameter, and so on, until the energy supply signal segment in each of the all time periods is obtained, and finally the energy supply signal $f_1(t)$ is obtained.

In some possible embodiments, the plurality of selection indication values are preset, or determined by the second device, or determined by the first device.

Optionally, in case that the plurality of selection indication values are preset, the plurality of selection indication values may be preset in the first device and the second device, respectively, that is, the first device and the second device are the same preset plurality of selection indication values. The same plurality of selection indication values that are both preset by the first device and the second device may mean that among the plurality of selection indication values respectively preset by the first device and the second device, the selection indication values at the same position are the same.

Optionally, in case that the plurality of selection indication values are determined by the second device, before the first device sends the energy supply signal to the third device, the method further includes that: the first device receives a first indication information sent by the second device, and the first indication information carries the plurality of selection indication values. Accordingly, in case that the plurality of selection indication values are determined by the second device, before the second device receives the first signal sent by the third device, the method further includes that: the second device sends a first indication information to the first device, and the first indication information carries the plurality of selection indication values.

The first indication information may be carried by a downlink message, and may be, for example, any one of: an RRC message, a MAC CE, a DCI, or a system broadcast message, and the like.

It should be noted that in the foregoing embodiment, the first indication information, the third indication information, the fifth indication information, and the seventh indication information may be carried by the same downlink message, for example, in the same RRC message. Alternatively, the first indication information, the third indication information, the fifth indication information, and the seventh indication information may be carried by different downlink messages, for example, by different RRC messages, or for example, the first indication information, the third indication information, the fifth indication information, and the seventh indication information may be carried by different types of messages among the RRC message, the MAC CE, the DCI, and the system broadcast message. Alternatively, at least two of the first indication information, the third indication information, the fifth indication information, and the seventh indication information are carried by the same downlink message, for example, the first indication information and the third indication information are carried by the first RRC message, the fifth indication information and the seventh indication information are carried by the first MAC CE, and the like. All possible situations are not exhaustive here.

The manner in which the second device determines the plurality of selection indication values may be that the manager manually selects and sets each selection indication value in combination with the number of the plurality of candidate generation parameters and the specific value of each candidate generation parameter, and determines the position of each selection indication value, but the specific manner of manual processing is not limited here. Alternatively, it may be that a random number sequence is generated, and the value range of each value in the random number sequence is set to an integer greater than or equal to 1 and less than or equal to the number of candidate generation parameters. It should be understood that this is merely an exemplary description, and the manner in which the second device determines the plurality of selection indication values may not be limited to the above example, but is not exhaustive.

Optionally, in case that the plurality of selection indication values are determined by the first device, before the first device sends the energy supply signal to the third device, the method further includes that: the first device sends second indication information to the second device, and the second indication information carries the plurality of selection indication values. Accordingly, in case that the plurality of selection indication values are determined by the first device, before the second device receives the first signal sent by the third device, the method further includes that: the second device receives second indication information sent by the first device, and the second indication information carries the plurality of selection indication values.

The second indication information may be carried by an uplink message, for example, any one of: an RRC message, a MAC CE, or an uplink control information (UCI), and the like.

In the foregoing embodiment, the second indication information, the fourth indication information, the sixth indication information, and the eighth indication information may be carried by the same uplink message, for example, in the same uplink RRC message. Alternatively, the second indication information, the fourth indication information, the sixth indication information, and the eighth indication information may be carried by different uplink messages, for example, by different uplink RRC messages, or for example, the second indication information, the fourth indication information, the sixth indication information, and the eighth indication information may be carried by different types of messages among the uplink RRC messages, the MAC CE, and the UCI. Alternatively, at least two of the second indication information, the fourth indication information, the sixth indication information, and the eighth indication information are carried by the same uplink message, for example, the second indication information and the sixth indication information are carried by the second RRC message, the fourth indication information and the eighth indication information are carried by the third RRC message, and the like. All possible situations are not exhaustive here.

If it is necessary to transmit the first indication information to eighth indication information between the first device and the second device, the first indication information to eighth indication information may be encrypted and transmitted. The encryption method may adopt any encryption method in the related art. In one example, wired equivalent privacy (WEP) mechanism of rivest cipher 4 (RC4) may be used for encryption. In yet another example, 3rd generation partnership project (3GPP) access stratum (AS) security technology may be used for encryption. In yet another example, internet protocol security (IPSEC) may be used for encryption. The present invention is merely an exemplary description and does not provide an exhaustive list of all possible encryption methods.

The manner in which the first device determines the plurality of selection indication values is similar to the manner in which the second device provided in the foregoing embodiment determines the plurality of selection indication values, and thus repeated description will not be made.

From the description of the foregoing embodiment, it can be seen that the energy supply signal sent on the first device side is specifically a time-varying energy supply signal, and unless otherwise specified, the energy supply signal and the time-varying energy supply signal have the same meaning hereinafter, and will not be repeatedly explained.

In some possible embodiments, the processing of the third device may include that: the third device receives an energy supply signal sent by a first device, wherein a time-domain range of the energy supply signal includes a plurality of time periods, the energy supply signal is generated by different first parameters during different time periods in the plurality of time periods; and the third device sends a first signal to a second device, wherein the first signal carries data reported by the third device.

The energy supply signal sent by the first device may be expressed as $f_1(t)$. Correspondingly, the energy supply signal received by the third device from the first device is transmitted to the third device through a channel between the first device and the third device. Therefore, the energy supply signal received by the third device from the first device is as follows: $Y_{tag}^{rec} = h_{UT} f_1(t)$, $h_{UT}$ is the channel from the first device to the third device, $Y_{tag}^{rec}$ is the energy supply signal received by the third device.

Before the third device sends the first signal to the second device, the method further includes that: the third device modulates a reported data onto the energy supply signal to obtain the first signal.

The third device modulates the reported data onto the energy supply signal to obtain the first signal, which may mean that the third device modulates the reported data onto the energy supply signal in a specified modulation manner to obtain the first signal. The specified modulation manner may be set in advance, and may be related to the type of candidate generation parameter. Alternatively, the specified modulation manner may be a modulation manner fixed by the third device, and the type of the candidate generation parameter is determined based on the specified modulation manner of the third device.

The reported data may be acquired in advance by the third device, or may be acquired after receiving the energy supply signal, and the present embodiment does not limit the content of the reported data, the collection method and the collection time of the reported data.

The operation by the third device of modulating the reported data onto the energy supply signal in a specified modulation manner to obtain the first signal, may include that: the third device modulates the value of the symbol mapping to be transmitted onto the energy supply signal in the specified modulation manner to obtain the first signal. The symbols to be transmitted include information symbols, and the information symbol is the reported data, and unless otherwise specified, the data reported by the third device may be equivalent to the information symbol, and the description will not be repeated.

The information symbols may be obtained by sampling, for example, the number of information symbols may be a plurality of information symbols, and the value of each information symbol may be a numerical value collected at a sampling point. For another example, due to that modulation rate $f_{tag}$ of the third device information in a zero power system is not high, the sampling rate is generally greater than $f_{tag}$, one information symbol of the third device (that is, within the time range of one information symbol) may correspond to a plurality of sampling points, and therefore, the value of the information symbol can be obtained by averaging the numbers of the plurality of sampling points corresponding to the time range of one information symbol, thereby reducing the influence of noise.

The symbols to be transmitted may further include sharing information. The shared information may be a sequence of length L, and the value of each position in the sequence may be predetermined, and it should be noted that the same value of the shared information and the same length of the shared information may be preconfigured or preset on the third device and the second device. Hereinafter, unless otherwise specified, the shared information and the values of the shared information have the same meaning, and repeated description will not be made. In one possible example, the sharing information may also be referred to as a preamble.

Exemplarily, the symbols to be transmitted can be expressed as $r(t)$, the energy supply signal received by the third device from the first device is expressed as: $Y_{tag}^{rec} = h_{UT} f_1(t)$. Accordingly, the first signal generated by the third device may be expressed as $Y_{tag}^{ref} = h_{UT} F(f_1(t), r(t))$, $F(f_1(t), r(t))$ represents the modulated signal after modulating $r(t)$ onto the energy supply signal $f_1(t)$.

The first parameter is an amplitude parameter or a phase parameter. Specifically, the plurality of candidate generation parameters include a plurality of candidate amplitude parameters or a plurality of candidate phase parameters.

Optionally, in case that the first parameter is the amplitude parameter, the third device modulates the reported data to the energy supply signal to obtain the first signal, including that: the third device adopts an amplitude modulation manner to modulate the reported data onto the energy supply signal to obtain the first signal. The amplitude modulation manner may include an amplitude shift keying (ASK). It should be understood that other amplitude modulation manners may also be employed in actual processing, and the list is not exhaustive here.

Optionally, in a case that the first parameter is the phase parameter, the third device modulates the reported data to the energy supply signal to obtain the first signal, including that: the third device adopts an amplitude modulation manner to modulate the reported data onto the energy supply signal to obtain the first signal. The phase modulation manner may include a phase-shift keying (PSK). It should be understood that other phase modulation manners may also be employed in actual processing, and will not be exhaustive here.

In some possible embodiments, the first signal received by the second device from the third device may be a first signal after transmission via a channel between the third device and the second device. The first signal $Y_{BS}$ received by the second device can be expressed as: $Y_{BS} = h_{TB} h_{UT} F(f(t), r(t))$, $h_{TB}$ is a channel between the third device and the second device.

The second signal may be a signal used by the second device to process the first signal, but the second signal is not a signal that needs to be sent.

Optionally, the second device may generate the second signal when the duration of the second signal can be determined.

In this case, the second device may generate the second signal in advance as long as the duration of the second signal can be determined before receiving the first signal.

In this case, the duration of the second signal may be predetermined, specifically, the duration of the second signal may be equal to the duration of the energy supply signal. The duration of the energy supply signal may be preset, or determined by the first device, or determined by the second device. If the duration of the energy supply signal is preset, the same duration of the energy supply signal is preset in both the first device and the second device. If the duration of the energy supply signal is determined by the first device, the first device may send the duration of the energy supply signal to the second device. The second device receives the duration of the energy supply signal and takes the duration of the energy supply signal as the duration of the second signal.

Optionally, after receiving the first signal, the second device may determine a plurality of time periods according to the duration of the second signal, and then generate the second signal.

In this case, the duration of the second signal may be the same as the duration of the first signal. For example, after receiving the first signal sent by the third device, the second device may obtain the duration of the first signal, and take the duration of the first signal as the duration of the second signal. Alternatively, in this case, the duration of the second signal may be predetermined, and the duration of the second signal may be equal to the duration of the energy supply signal. The determination method of the duration of the energy supply signal is the same as that of the foregoing embodiment, and the description thereof will not be repeated. Different from the foregoing embodiment, in this case, although the second device can determine the duration of the second signal in advance, the second signal is generated after receiving the first signal.

In two adjacent time periods in the plurality of time periods, an end time of the preceding time period and a starting time of the next time period are the same. In the plurality of time periods, the duration of each time period is preset, or determined by the second device, or determined by the first device. As long as the duration of each of the plurality of time periods used by the first device is the same as the duration of each of the plurality of time periods used by the second device, it is within the protection scope of the present embodiment. The method of determining the duration of the plurality of time periods is the same as that provided in the above-described embodiment, the description thereof will not be repeated.

In some possible embodiments, before the second device processes the first signal based on the second signal to obtain data reported by the third device, the method may further include that: the second device generates the second signal, and the second signal is a time-varying second signal. Hereinafter, unless otherwise specified, the second signal has the same meaning as the time-varying second signal, and will not be described in detail.

The second signal is generated by an i-th second parameter within an i-th time period in the plurality of time periods, the i-th second parameter is one of a plurality of candidate generation parameters, and i is a positive integer. That is, the second signal may include a second signal segment within each of a plurality of time periods. Specifically, the second signal segment of the second signal in the i-th time period is generated by the i-th second parameter, and the i-th second parameter is one of the plurality of candidate generation parameters.

The i-th time period may be any one of a plurality of time periods, and although the second parameters used for different time periods are different, the processing of each time period is the same as that of the i-th time period, and thus the detailed description thereof will not be described.

It should be noted that the above-described second signal segment may also be referred to as a second signal sub-portion, a partial second signal, and the like, and hereinafter, for the sake of concise description, as long as the second signal is in any one time period, it is referred to as a second signal segment in any one time period.

In some embodiments, the second device determines a second parameter within each time period based on a ranking of a plurality of candidate generation parameters, and generates a second signal.

The i-th second parameter is an i-th candidate generation parameter in the plurality of candidate generation parameters. That is, the method in which the second device determines the i-th second parameter may be: the second device selects the i-th candidate generation parameter from a plurality of candidate generation parameters as the i-th second parameter.

It should be emphasized that in the present embodiment, the first device and the second device need to share the same plurality of candidate generation parameters. In one example, that first device and the second device may share a discrete set $\Phi$, the discrete set contains a plurality of candidate generation parameters. Since the preset method or determination method of the plurality of candidate generation parameters, the form and composition of the plurality of candidate generation parameters, and the like are the same as those described with respect to the plurality of candidate generation parameters in the above-described embodiment related to the first device, the description thereof will not be repeated.

Exemplarily, when changing the second parameter of the second signal for the i-th time, the second device may select a candidate generation parameter whose ranking position is the i-th position from the discrete set $\Phi$ as the i-th second parameter, and then generate a second signal segment within the i-th time period based on the i-th second parameter, and so on, until the second signal segment in each of the all time periods is obtained, and finally the second signal $f_2(t)$ is obtained.

In some embodiments, the second device determines a second parameter in each time period from a plurality of candidate generation parameters based on each selection indication value of the plurality of selection indication values, and generates an energy supply signal.

The i-th second parameter is determined from the plurality of candidate generation parameters based on the i-th selection indication value among the plurality of selection indication values. The i-th selection indication value is a positive integer less than or equal to a number of the plurality of candidate generation parameters. The i-th selection indication value is used to indicate a target ranking position. The i-th second parameter is a candidate generation parameter located at the target ranking position in the plurality of candidate generation parameters.

In the present embodiment, the first device and the second device need to share the same plurality of candidate generation parameters and the same plurality of selection indication values. Since the preset manner or determination manner of the plurality of selection indication values, the composition form and specific contents of the plurality of selection indication values, the preset manner or determination manner of the plurality of candidate generation parameters, the form and composition of the plurality of candidate generation parameters, and the like are the same as those in the above-described embodiments, the description thereof will not be repeated.

Exemplarily, when changing the second parameter of the second signal for the i-th time, the second device may select the selection indication value at the i-th position from the indication value sequence $k$ as the i-th selection indication value. The second device may select the candidate generation parameter whose ranking position is the target ranking position from the discrete set $\Phi$, according to the target ranking position indicated by the i-th selection indication value, as the i-th second parameter. The second device may generate a second signal segment within an i-th time period based on the i-th second parameter, and so on, until the second signal segment in each of the all time periods is obtained, and finally the second signal $f_2(t)$ is obtained.

It should be understood that although the parameter selected for each time period is referred to as the second parameter for the second device, it should be pointed out that the strategy or manner in which the first device selects the first parameter for each time period and the second device selects the second parameter for each time period should be the same. For example, if the energy supply signal of the first device is generated by the i-th first parameter in the i-th time period among the plurality of time periods, and the i-th second parameter is the i-th candidate generation parameter among the plurality of candidate generation parameters. The second signal of the second device is generated by an i-th second parameter within an i-th time period in the plurality of time periods, and the i-th second parameter is an i-th candidate generation parameter in the plurality of candidate generation parameters. For another example, if the energy supply signal of the first device is generated by an i-th first parameter in an i-th time period in the plurality of time periods, and the i-th first parameter is determined from the plurality of candidate generation parameters based on an i-th selection indication value in the plurality of selection indication values. The second signal of the second device is generated by an i-th second parameter in an i-th time period in the plurality of time periods, and the i-th second parameter is determined from the plurality of candidate generation parameters based on an i-th selection indication value in the plurality of selection indication values. In this way, it can be ensured that the first parameter used by the first device in each time period of the energy supply signal is the same as the second parameter used by the first device in each time period of the second signal, thereby ensuring that the second device can correctly eliminate the influence of the energy supply signal in the first signal and correctly obtain the data reported by the third device.

The second device may generate a second signal based on the processing of the foregoing embodiment, and the second signal generated on the second device side is a time-varying second signal. In some possible examples, the second signal may include a second parameter corresponding to each of the plurality of time periods, that is, the second parameter corresponding to each of the plurality of time periods may be extracted to form the second signal. In still some possible examples, the second signal may be obtained by adjusting the second parameter corresponding to each time period in the plurality of time periods, that is, only the second parameter corresponding to the plurality of time periods may be extracted and modulated to form the second signal, and in such examples, the second signal may be completely equal to the energy supply signal. However, whether modulated or not, the second device does not need to send the second signal

In some possible embodiments, the second device processes the first signal based on the second signal to obtain data reported by the third device, including that: the second device obtains a channel estimation value based on a sample value of the first signal within a first duration, shared information and a second parameter of the second signal within the first duration, wherein the first duration is a duration of the shared information in the first signal; and the second device processes the first signal based on the channel estimation value and the second signal to obtain data reported by the third device.

The shared information may be configured according to actual needs. The length of the shared information may also be configured according to actual needs, for example, the shared information may be a sequence of length L (L is an integer greater than or equal to 2). The values at each position of the shared information may be 1 or 0. Alternatively, the values at each position of the shared information may be a value at each position of the shared information determined based on a preset rule, for example, if L is equal to 4, the shared information may be 1010 or 0101, and the specific composition and length of the shared information are not exhaustive here. It should be noted that the same value of shared information and the same length of shared information may be preconfigured or preset on the third device and the second device side.

Since the second device may preset the shared information, and the second device may acquire the information modulation rate of the third device in advance, the second device may determine the first duration according to the length of the shared information and the information modulation rate, and the first duration is the duration of the shared information.

The second device obtains the channel estimation value based on the sample value of the first signal within the first duration, the shared information, and the second parameter of the second signal within the first duration, which may mean that: the second device converts the received first signal into a baseband signal through I/Q paths; obtains the sample value of each sampling point of the baseband signal within the first duration; performs a calculation based on the shared information and a second parameter of the second signal within a first duration to obtain a first result; and obtains the channel estimation value based on the sample value of each sampling point of the baseband signal within the first duration and the first result. I/Q refers to the in-phase signal and orthogonal signal of the signal, and are the cos component and sin component of the signal. The sample value is specifically a sample value of the shared information.

The second parameter of the second signal within the first duration may refer to a second parameter corresponding to each sampling point of the second signal within the first duration. That is, the number of the second parameters and the number of sampling points in the first duration should be the same, for example, L. In one example, the duration of each time period may be different from the sampling interval, for example, if the number of sampling points corresponding to the first duration is L, and the duration of one time period may include two sampling points, the first duration may include L/2 time periods. Accordingly, the second parameters corresponding to the first sampling point and the second sampling point may be the same. In one example, the duration of each of the plurality of time periods may be the same as the sampling interval, then the first duration includes L time periods, and correspondingly, the second parameter corresponding to each sampling point is the same as the second parameter used in the time period.

Performing the calculation based on the shared information and the second parameter of the second signal within the first duration to obtain the first result; and obtaining the channel estimation value based on the sample value of each sampling point of the baseband signal within the first duration and the first result, which may be related to a type of an actual candidate generation parameter (i.e., a second parameter). For example, if the second parameter is an amplitude parameter, it may specifically include: multiplying the shared information and the second parameter of the second signal within a first duration to obtain a first result; and dividing a sample value of each sampling point of the baseband signal within a first duration by the first result to obtain the channel estimation value. For another example, if the second parameter is a phase parameter, it may specifically include: adding the shared information and the second parameter of the second signal within a first duration to obtain a first result; calculating the first result to obtain a second result; and dividing a sample value of each sampling point of the baseband signal within the first duration by the second result to obtain the channel estimation value. The operation of calculating the first result to obtain the second result may be: expressing the first result as "x", and calculating by using $e^{j*x}$ to obtain a second result.

The second device processes the first signal based on the channel estimation value and the second signal to obtain data reported by the third device, which may specifically mean that: the second device processes the first signal within the second duration based on the channel estimation value and the second parameter of the second signal within the second duration to obtain the data reported by the third device. The second duration refers to a remaining duration in the duration of the first signal except the first duration. The processing of the first signal within the second duration refers to processing the value of each sampling point of the baseband signal within the second duration. The conversion relationship between the baseband signal and the first signal has been described in the foregoing embodiment, and will not be described in detail.

Specifically, the second device processes the first signal within the second duration based on the channel estimation value and the second parameter of the second signal within the second duration to obtain data reported by the third device, which may be related to a type of an actual candidate generation parameter (that is, the second parameter). For example, if the second parameter is an amplitude parameter, it may specifically include: dividing a sample value of each sampling point of the baseband signal within a second duration by the channel estimation value to obtain a third result; and dividing the third result by a second parameter of the second signal within a second duration to obtain an information symbol, that is, data reported by the third device. For another example, if the second parameter is a phase parameter, it may specifically include: dividing a sample value of each sampling point of the baseband signal within a second duration by the channel estimation value to obtain a third result; and obtaining an information symbol, that is, data reported by the third device, based on the third result and the second parameter of the second signal within the second duration.

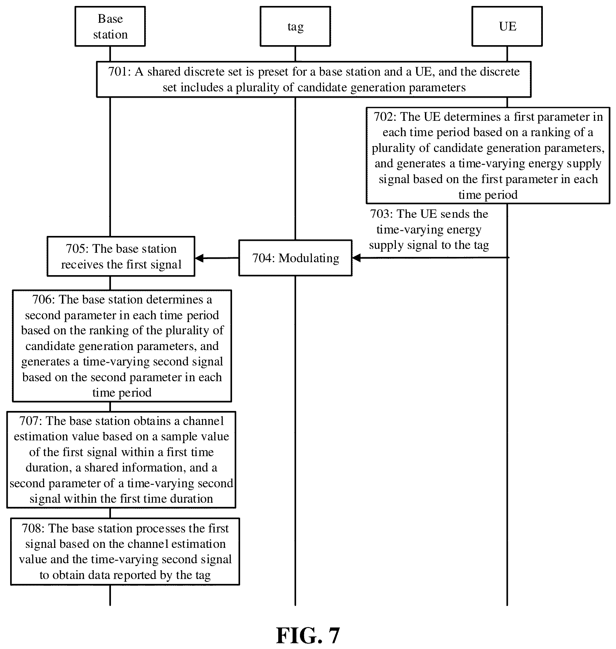

Referring to a specific embodiment of the communication method performed by the first device, the second device and the third device, an exemplary description is made with reference to FIG. 7, taking the first device as a UE, the second device as a base station, and the third device as a tag, and specifically describing the energy supply signal as a time-varying energy supply signal.

At step 701, a base station and a UE preset a shared discrete set, and the discrete set includes a plurality of candidate generation parameters.

Exemplarily, the discrete set is expressed as $\Phi$, specifically including $\{\phi_1, \phi_2, \cdots \phi_N\}$, that is, N candidate generation parameters, N is an integer greater than or equal to 2. Any candidate generation parameter can represent a certain type of parameter (such as amplitude parameter or phase parameter, etc.). Further, it should be understood that the type of each candidate generation parameter should be the same, such as all being amplitude parameters or all being phase parameters.

At step 702, the UE determines a first parameter in each time period based on a ranking of a plurality of candidate generation parameters, and generates a time-varying energy supply signal based on the first parameter in each time period.

For example, in a plurality of time periods within the time-domain range of the energy supply signal, the UE generates the energy supply signal segment for each time period by using the first parameter corresponding to each time period. The duration of each of the plurality of time periods is equal to $1/f_{tag}$, $f_{tag}$ represents the information modulation rate of tag, that is, the UE changes the first parameter of the energy supply signal once at intervals of $1/f_{tag}$. Specifically, when changing the first parameter of the energy supply signal for the i-th time (i.e., when generating the energy supply signal segment of the i-th time period), the second device selects a candidate generation parameter whose ranking position is the i-th position from the discrete set $\Phi$ as the i-th first parameter, and then generates an energy supply signal segment within the i-th time period based on the i-th first parameter, and so on, until the energy supply signal segment in each of the all time periods is obtained, and finally the time-varying energy supply signal $f_1(t)$ is generated.

At step 703, the UE sends the time-varying energy supply signal to the tag.

Accordingly, the tag receives the time-varying energy supply signal sent by the UE. The time-varying energy supply signal received on the tag side is

$$Y_{tag}^{rec} = h_{UT} f_1(t)$$ , $h_{UT}$ is the channel from the UE to tag, $Y_{tag}^{rec}$ is the time-varying energy supply signal received by tag.

At step 704, the tag modulates the reported data onto a time-varying energy supply signal to obtain a first signal, and reflects the first signal to the base station.

The reported data may specifically be information symbols among symbols to be transmitted, and the symbols to be transmitted may be represented as $r(t)$, the symbols to be transmitted may consist of shared information and information symbols. The symbol to be transmitted has been described in detail in the foregoing embodiment, and will not be described here.

Specifically, the tag modulates a symbol to be transmitted onto the energy supply signal in a specified modulation manner to obtain the first signal, and sends the first signal to the base station. The first signal may be represented as

$$Y_{tag}^{ref} = h_{UT} F(f_1(t), r(t))$$ , $F(f_1(t), r(t))$ represents the modulated signal after modulating $r(t)$ onto $f_1(t)$.

At step 705, the base station receives the first signal.

The first signal received by the base station is the first signal transmitted through the channel between the base station and the tag, therefore, the first signal received at the base station side can be expressed as $Y_{BS} = h_{TB} h_{UT} F(f(t), r(t))$, $h_{TB}$ represents the channel from tag to the base station.

At step 706, the base station determines a second parameter in each time period based on the ranking of the plurality of candidate generation parameters, and generates a time-varying second signal based on the second parameter in each time period.

Specifically, the base station may be a second signal generated based on a plurality of candidate generation parameters in a discrete set $\Phi$. For example, when changing the second parameter of the second signal for the i-th time (i.e., when the base station generates the second signal segment for the i-th time period), the base station selects a candidate generation parameter whose ranking position is the i-th position from the discrete set $\Phi$ as the i-th second parameter, and so on, until the second parameter in each of the all time periods is obtained, and finally the time-varying second signal $f_2(t)$ is generated. Exemplarily, the base station may directly compose the second parameters of each time period into the second signal.

At step 707, the base station obtains a channel estimation value based on a sample value of a first signal within a first duration, shared information, and a second parameter of a time-varying second signal within the first duration.

Exemplarily, the channel estimation value $h_{TB}h_{UT}$ is obtained based on the shared information in the tag signal $r(t)$, the sample value of the shared information of the first signal within the first duration, and the second signal $f_2(t)$ corresponding to the shared information.

At step 708, the base station processes the first signal based on the channel estimation value and the time-varying second signal to obtain data reported by the tag.

First, the channel influence in the first signal (that is, $Y_{BS} = h_{TB}h_{UT}F(f_1(t),r(t))$, is eliminated based on the channel estimation value to obtain $F(f_1(t),r(t))$. Then, the influence of the time-varying energy supply signal $f_1(t)$ from $F(f_1(t),r(t))$ is eliminated based on the time-varying second signal $f_2(t)$, to obtain the data reported (that is an information symbol) by the tag in $r(t)$. It should be pointed out here that although the time-varying energy supply signal is expressed as $f_1(t)$, the time-varying second signal is expressed as $f_2(t)$, mainly because the time-varying energy supply signal and the time-varying second signal are generated by different devices, and the time-varying energy supply signal is modulated and sent after being generated based on the first parameter, the time-varying second signal may be composed only of the second parameter and may or may not be modulated, so in this example, different representation manners are used to represent the time-varying energy supply signal and the time-varying second signal.

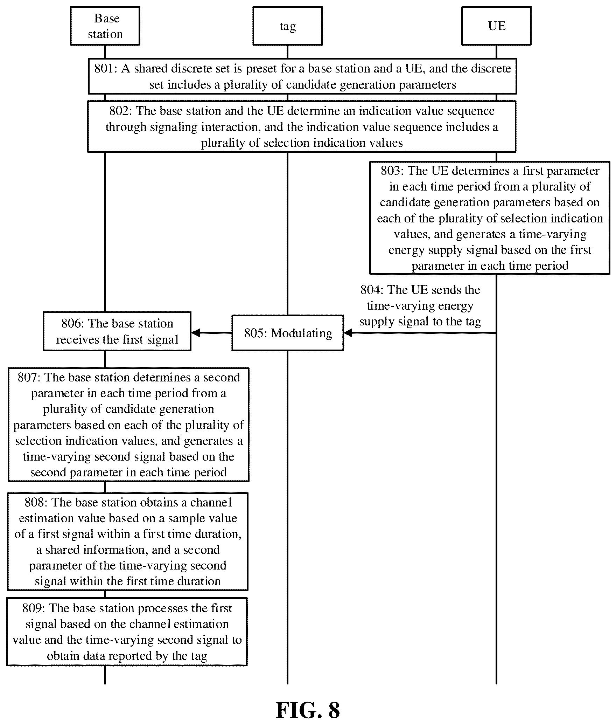

With regard to the specific embodiment of the communication method performed by the first device, the second device and the third device, another exemplary description is made with reference to FIG. 8, taking the first device as a UE, the second device as a base station, and the third device as a tag, and specifically describing the energy supply signal as a time-varying energy supply signal.

At step 801, a base station and a UE preset a shared discrete set, and the discrete set includes a plurality of candidate generation parameters. This step is the same as that of step 701, and will not be repeated.

At step 802, the base station and the UE determine an indication value sequence through signaling interaction, and the indication value sequence includes a plurality of selection indication values.

The indication sequence value may be generated by the base station and then sent to the UE, it may also be generated by the UE and then sent to the base station. The signaling carrying the indication sequence value has been described in detail in the foregoing embodiments, and will not be described in detail.

The indication sequence value may be expressed as $\boldsymbol{k}$, $\boldsymbol{k} = [k_1, k_2, \cdots k_Q]$. Q is an integer greater than or equal to 2, Q represents the number of selection indication values, that is, the plurality of selection indication values are specifically Q selection indication values.

At step 803, the UE determines a first parameter in each time period from a plurality of candidate generation parameters based on each of the plurality of selection indication values, and generates a time-varying energy supply signal based on the first parameter in each time period.

For example, in a plurality of time periods within the time-domain range of the energy supply signal, the UE generates the energy supply signal segment for each time period by using the first parameter corresponding to each time period. The duration of each of the plurality of time periods is equal to 1/$f_{tag}$, $f_{tag}$ represents the information modulation rate of tag, that is, the UE changes the first parameter of the energy supply signal once at intervals of 1/$f_{tag}$. Specifically, when changing the first parameter of the energy supply signal for the i-th time (i.e., when generating the energy supply signal segment of the i-th time period), the UE selects the selection indication value at the i-th position from the indication value sequence $\boldsymbol{k}$ as the i-th selection indication value. According to the target ranking position indicated by the i-th selection indication value, the UE selects a candidate generation parameter whose ranking position is the target ranking position from the discrete set $\Phi$ as an i-th first parameter, and then generates an energy supply signal segment within an i-th time period based on the i-th first parameter, and so on, until the energy supply signal segment in each of the all time periods is obtained, and finally the energy supply signal $f_1(t)$ is obtained.

At step 804, the UE sends a time-varying energy supply signal to the tag.

At step 805, the tag modulates the reported data onto a time-varying energy supply signal to obtain a first signal, and reflects the first signal to the base station.

At step 806, the base station receives the first signal.

The detailed description of the above-described step 804 to step 806 is the same as that of step 703 to step 705 in the above-described example, and the description will not be repeated.

At step 807, the base station determines a second parameter in each time period from a plurality of candidate generation parameters based on each of the plurality of selection indication values, and generates a time-varying second signal based on the second parameter in each time period.

For example, when changing the second parameter of the second signal for the i-th time (i.e., when the base station generates the second signal segment of the i-th time period), the base station selects the selection indication value at the i-th position from the indication value sequence $k$ as the i-th selection indication value. According to the target ranking position indicated by the i-th selection indication value, the base station selects the candidate generation parameter whose ranking position is the target ranking position from the discrete set $\Phi$ as the i-th second parameter, and so on, until the second parameter in each of the all time periods is obtained, and finally the time-varying second signal $f_2(t)$ is generated. Exemplarily, the base station may directly compose the second parameters of each time period into the second signal.

At step 808, the base station obtains a channel estimation value based on a sample value of a first signal within a first duration, shared information, and a second parameter of the time-varying second signal within the first duration.

At step 809, the base station processes the first signal based on the channel estimation value and the time-varying second signal to obtain data reported by the tag.

The processing of step 808 to step 809 is the same as the detailed description of step 707 to step 708 above, and the description thereof will not be repeated.

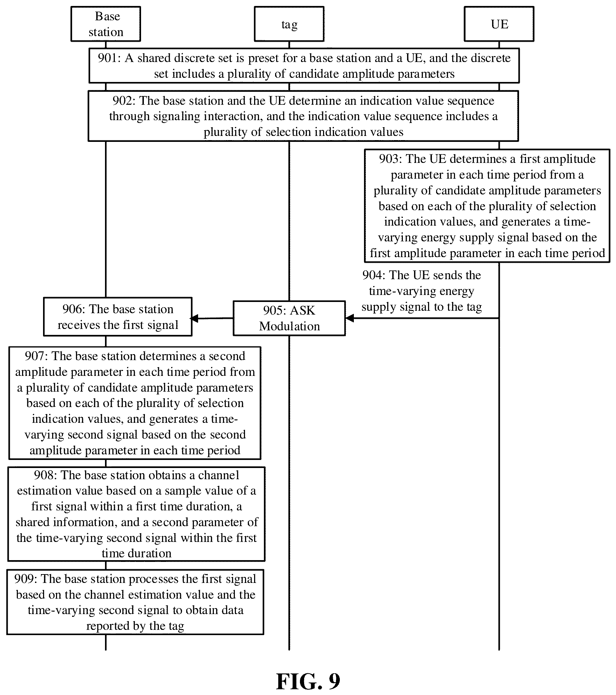

According to the specific embodiment of the communication method performed by the first device, the second device and the third device, on the basis of the example provided in FIG. 8, an exemplary description is made with reference to FIG. 9, taking the first device as a UE, the second device as a base station, and the third device as a tag, and specifically describing the energy supply signal as a time-varying energy supply signal, the discrete set as an amplitude discrete set, and the candidate generation parameter as a candidate amplitude parameter.

At step 901, the base station and the UE preset a shared amplitude discrete set, and the amplitude discrete set includes a plurality of candidate amplitude parameters.

Exemplarily, the amplitude discrete set is expressed as $\Phi 1$, specifically including $\{\phi_{11}, \phi_{12}, \cdots \phi_{1N}\}$, that is, N candidate amplitude parameters, N being an integer greater than or equal to 2. In this example, the amplitude of the energy supply signal is selected as the time-varying factor, that is, in step 901, the base station and the UE preset that elements in a set of shared amplitude discrete sets are different candidate amplitude parameters.

At step 902, the base station and the UE determine an indication value sequence through signaling interaction, and the indication value sequence includes a plurality of selection indication values. This step is the same as the detailed description of step 802, and will not be repeated.

At step 903, the UE determines a first amplitude parameter in each time period from a plurality of candidate amplitude parameters based on each of the plurality of selection indication values, and generates a time-varying energy supply signal based on the first amplitude parameter in each time period.

For example, when changing the first amplitude parameter of the energy supply signal for the i-th time (i.e., when generating the energy supply signal segment for the i-th time period), the UE selects the selection indication value at the i-th position from the indication value sequence $k$ as the i-th selection indication value. According to the target ranking position indicated by the i-th selection indication value, the UE selects the candidate amplitude parameter whose ranking position is the target ranking position from the amplitude discrete set $\Phi 1$ as the i-th first amplitude parameter. The UE generates an energy supply signal segment within an i-th time period based on the i-th first amplitude parameter, and so on, until the energy supply signal segment in each of the all time periods is obtained, and finally the energy supply signal $f_1(t)=A(t)\cos(\omega t)$ is obtained, $A(t)$ includes the amplitude parameter in each of a plurality of time periods.

At step 904, the UE sends a time-varying energy supply signal to the tag.

The energy supply signal received by Tag is expressed as: $Y_{tag}^{rec} = h_{UT} A(t) \cos(\omega t)$ , $h_{UT}$ is the channel from the UE to tag.

At step 905, the tag modulates the reported data onto a time-varying energy supply signal by using an ASK modulation manner to obtain a first signal, and reflects the first signal to the base station.

The first signal may be expressed as: $Y_{tag}^{ref} = h_{UT} A(t) r(t) \cos(\omega t)$ , $r(t)$ is the symbol to be transmitted, and the detailed description of the symbol to be transmitted is the same as that of the above-described embodiment, and the detailed description of the symbol to be transmitted is not repeated.

At step 906, the base station receives the first signal.

The first signal received by the base station is a first signal transmitted through a channel between the tag and the base station, and the first signal $Y_{BS}$ can be expressed as: $Y_{BS} = h_{TB}h_{UT}A(t)r(t)\cos(\omega t)$ =abs$(h_{TB}h_{UT})A(t)r(t)\cos(\omega t + angle(h_{TB}h_{UT}))$, abs$(h_{TB}h_{UT})$ represents the amplitude of the channel $h_{TB}h_{UT}$, angle $(h_{TB}h_{UT})$ represents the Phase of the channel $h_{TB}h_{UT}$,

$h_{TB}$ represents the channel between the tag and the base station.

At step 907, the base station determines a second amplitude parameter in each time period from a plurality of candidate amplitude parameters based on each of the plurality of selection indication values, and generates a time-varying second signal based on the second amplitude parameter in each time period.

For example, when changing the amplitude parameter of the second signal for the i-th time (i.e., when the base station generates the second signal segment for the i-th time period), the base station selects the selection indication value at the i-th position from the indication value sequence **k** as the i-th selection indication value. According to the target ranking position indicated by the i-th selection indication value, the base station selects a candidate amplitude parameter whose ranking position is the target ranking position from the discrete set Φ as the i-th second amplitude parameter, and so on, until the second amplitude parameter in each of the all time periods is obtained, and finally the time-varying second signal $f_2(t)=A(t)$ is generated. Exemplarily, the base station may directly compose the second amplitude parameter of each time period into the second signal.

At step 908, the base station obtains a channel estimation value based on a sample value of a first signal within a first duration, shared information, and a second amplitude parameter of the time-varying second signal within the first duration.

Specifically, the base station converts the received first signal into a baseband signal through two I/Q paths, and obtains a sample value of each sampling point of the baseband signal within a first duration. The base station multiplies the shared information and a second amplitude parameter of the second signal within a first duration to obtain a first result. The base station divides the sample value of each sampling point of the baseband signal within a first duration by the first result to obtain a channel estimation value.

For example, the baseband signal may be expressed as: $Y_{BS}^{base\_band} = h_{TB}h_{UT}A(t)r(t)$. Since in the signal design, the shared information is designed to be transmitted at the beginning of the whole signal, it is assumed that the first duration is expressed as $T_P$, the starting time of the time range of the baseband signal is expressed as 0, then the first duration may be expressed as $0 \sim T_P$, the sample value of each sampling point of the baseband signal within the first duration may be expressed as $Y_{BS}^{base_{band}}(0:T_P)$. The second amplitude parameter of the second signal within the first duration (i.e., time range $0 \sim T_P$) may be expressed as $\bar{a}$, the shared information is expressed as $\bar{r}$, the first result can be expressed and calculated by the following formula $\overline{r}a$. The channel estimation values can be expressed as

$$\frac{Y_{BS}^{base_{band}}(0:T_P)}{\overline{r}a} = (h_{TB}h_{UT})'$$

, $(h_{TB}h_{UT})'$ represents a channel estimation value, preferably $(h_{TB}h_{UT})'$ is equal to $h_{TB}h_{UT}$, hereinafter, $h_{TB}h_{UT}$ is adopted to represent the channel estimation value.

At step 909, the base station processes the first signal based on the channel estimation value and the time-varying second signal to obtain data reported by the tag.

Specifically, the base station obtains a third result by dividing a sample value of each sampling point of the baseband signal within the second duration by a channel estimation value. The base station divides the third result by a second amplitude parameter of the second signal within a second duration to obtain an information symbol, that is, the data reported by a tag.

For example, the duration of the first signal may be expressed as $T_S$, the first duration is expressed as $T_P$, then the second duration may be $T_S - T_P$, assuming that the starting time of the time range of the baseband signal is expressed as 0, the sample value of each sampling point of the baseband signal within the second time length can be expressed as $Y_{BS}^{base\_band}(T_P:T_S)$, then the third result can be expressed by the following formula:

$$A(T_P:T_S)r(T_P:T_S) = \frac{Y_{BS}^{base\_band}(T_P:T_S)}{h_{TB}h_{UT}}$$

, $A(T_P:T_S)r(T_P:T_S)$ represents the third result.

The second amplitude parameter of the second signal within the second duration may be $A(T_P:T_S)$, the corresponding information symbol may be expressed as a formula:

$$\frac{A(T_P:T_S)r(T_P:T_S)}{A(T_P:T_S)}$$

, $r(T_P:T_S)$ is the information symbol.

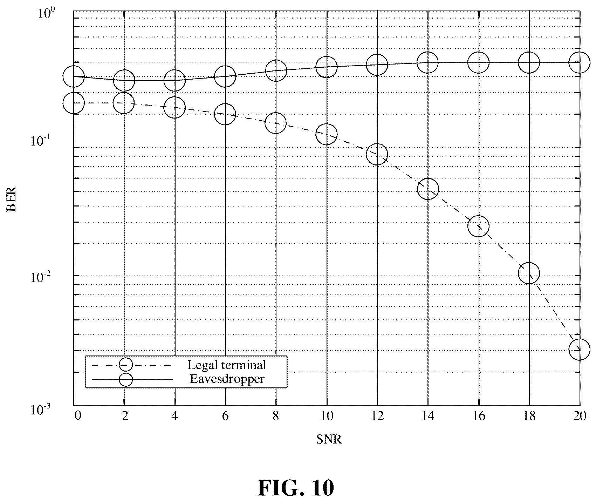

Next, with reference to FIG. 10, the result of simulation verification of the example provided in FIG. 9 above is described. In the simulation verification, the bit error rate (BER) of the tag information (i.e., the aforementioned information symbol) parsed by the eavesdropper and the legal person is mainly compared, the channel model adopted in the simulation verification is as follows: $h = \sqrt{Ld^{-\alpha}}G$, L is the road loss constant, which can be $L = \left(\frac{\lambda}{4\pi}\right)^2$, λ is the carrier wavelength, and the path loss index $\alpha$ is all taken as 2 when the carrier frequency is taken as 900 MHZ; d represents the end to end distance, and the value of d is 10 m in simulation verification, G represents small-scale fading and satisfies the distribution CN (0,1). It is assumed that the mapping set of tag under ASK is $r(t) \in \{0.9, 0.1\}$, 0.9 represents a mapping value of 1 bit, and 0.1 represents a mapping value of 0 bit; the amplitude discrete set is taken as $\phi_1$ = 0.3, $\phi_2$ = 7. The simulation results are illustrated in Fig. 10. It can be seen from Fig. 10 that at the same signal noise ratio (SNR), the BER of parsing tag information at the legal terminal (such as the base station in the example illustrated in Figure 9) is significantly lower than the bit error rate of the eavesdropper. For example, when the SNR is equal to 12, the BER of parsing the tag information at the eavesdropper is about 0.7, and the BER of parsing the tag information at the legal terminal is about 0.1. When the SNR is equal to 20, the BER of parsing the tag information at the eavesdropper is about 0.8, and the BER of parsing the tag information at the legal terminal is close to 0.001. It can also be seen from Fig. 10 that the higher the signal noise ratio, the lower the BER of the tag information parsed by legal terminal.

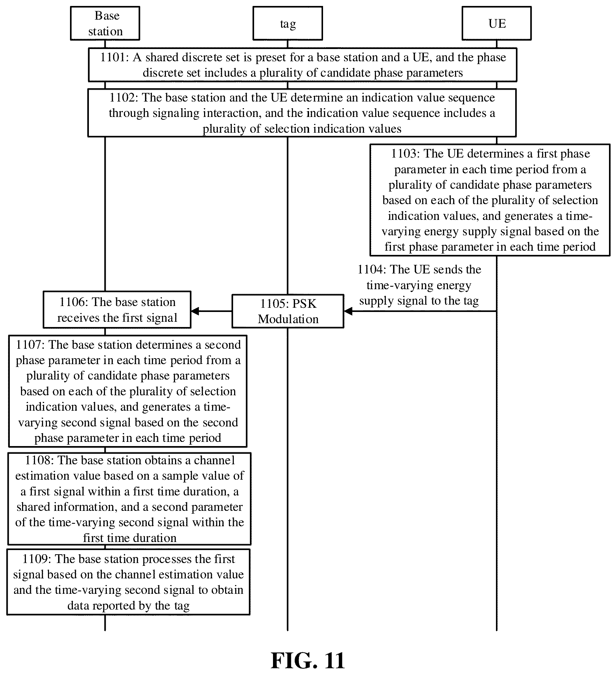

According to the specific embodiment of the communication method performed by the first device, the second device, and the third device, still on the basis of FIG. 8, an exemplary explanation is made with reference to FIG. 11, taking the first device as a UE, the second device as a base station, and the third device as a tag, and specifically describing the energy supply signal as a time-varying energy supply signal, the discrete set as an amplitude discrete set, and the candidate generation parameter as a candidate phase parameter.

At step 1101, the base station and the UE preset a shared phase discrete set, and the phase discrete set includes a plurality of candidate phase parameters.

Exemplarily, the phase discrete set is expressed as $\Phi2$ , specifically including $\{\phi_{21}, \phi_{22}, \cdots \phi_{2N}\}$, that is, N candidate phase parameters, N being an integer greater than or equal to 2. In this example, the phase of the energy supply signal is selected as the time-varying factor, that is, in step 1101, the base station and the UE preset that elements in a set of shared phase discrete sets are different candidate phase parameters.

At step 1102, the base station and the UE determine an indication value sequence through signaling interaction, and the indication value sequence includes a plurality of selection indication values. This step is the same as the detailed description of step 802, and will not be repeated.

At step 1103, the UE determines a first phase parameter in each time period from a plurality of candidate phase parameters based on each of the plurality of selection indication values, and generates a time-varying energy supply signal based on the first phase parameter in each time period.

For example, when changing the phase parameter of the energy supply signal for the i-th time (i.e., when generating the energy supply signal segment for the i-th time period), the UE selects the selection indication value at the i-th position from the indication value sequence **k** as the i-th selection indication value. According to the target ranking position indicated by the i-th selection indication value, the UE selects a candidate phase parameter whose ranking position is the target ranking position from the phase discrete set $\Phi2$ as an i-th first phase parameter, and then generates an energy supply signal segment within an i-th time period based on the i-th first phase parameter, and so on, until the energy supply signal segment in each of the all time periods is obtained, and finally the energy supply signal $f_1(t) = \cos(\omega t\, \theta(t))$ is obtained, $\theta(t)$ includes the phase parameter in each of a plurality of time periods.

At step 1104, the UE sends a time-varying energy supply signal to the tag.

The energy supply signal received by tag is expressed as: $Y_{tag}^{rec} = h_{UT} \cos\left(\omega t + \theta(t)\right)$ , $h_{UT}$ is the channel from the UE to tag.

At step 1105, the tag modulates the reported data onto a time-varying energy supply signal by using a PSK modulation manner to obtain a first signal, and reflects the first signal to the base station.

The first signal may be expressed as:

$Y_{tag}^{ref} = h_{UT} \cos\left(\omega t + \theta(t) + r(t)\right)$ , $r(t)$ is a symbol to be transmitted, and the detailed description thereof is the same as that of the foregoing embodiment.

At step 1106, the base station receives the first signal.

The first signal received by the base station is a first signal transmitted through a channel between the tag and the base station, and the first signal can be expressed as: $Y_{BS} = h_{TB}h_{UT}cos(\omega tx + \theta(t) + r(t)) = abs(h_{TB}h_{UT})cos(\omega t + \theta(t) + r(t) + angle(h_{TB}h_{UT}))$, $abs(h_{TB}h_{UT})$ represents the phase of the channel $h_{TB}h_{UT}$, $angle(h_{TB}h_{UT})$ represents the phase of the channel $h_{TB}h_{UT}$, $h_{TB}$ represents the channel between the tag and the base station.

At step 1107, the base station determines a second phase parameter in each time period from a plurality of candidate phase parameters based on each of the plurality of selection indication values, and generates a time-varying second signal based on the second phase parameter in each time period.

For example, when changing the phase parameter of the second signal for the i-th time (i.e., when the base station generates the second signal segment for the i-th time period), the base station selects the selection indication value at the i-th position from the indication value sequence **k** as the i-th selection indication value. According to the target ranking position indicated by the i-th selection indication value, the base station selects a candidate phase parameter whose ranking position is the target ranking position from the discrete set $\Phi$ as the i-th second phase parameter, and so on, until the second phase parameter in each of the all time periods is obtained, and finally the time-varying second signal $f_2(t)=\theta(t)$ is generated. Exemplarily, the base station may directly compose the phase parameters of each time period into the second signal.

At step 1108, the base station obtains a channel estimation value based on a sample value of a first signal within a first duration, shared information, and a second phase parameter of the time-varying second signal within the first duration.

Specifically, the first result is obtained by adding the shared information and the second phase parameter of the second signal within a first duration. The second result is obtained by calculating the first result. The channel estimation is obtained by value dividing a sample value of each sampling point of the baseband signal within the first duration by the second result. The first duration has been described in the foregoing embodiment, and the description thereof will not be repeated here.

For example, the baseband signal may be expressed as: $Y_{BS}^{base\_band} = h_{TB}h_{UT}e^{j*(\theta(t)+r(t))}$, assuming the first duration is expressed as $T_P$, the starting time of the time range of the baseband signal is expressed as 0, then the value of each sampling point of the baseband signal within the first duration is expressed as a sampled value as $Y_{BS}^{base_{band}}(0:T_P)$. The second phase parameter of the second signal within the first time period (i.e., time range 0 ~ $T_P$) may be expressed as $\bar{\theta}$, the value of shared information is expressed as $\bar{r}$, the first result is represented by adopting $\bar{\theta}+\bar{r}$. The second result may be calculated by using the formula $e^{j*(\bar{\theta}+\bar{r})}$. The channel estimation value may be expressed as

$$\frac{Y_{BS}^{base_{band}}(0:T_P)}{e^{j*(\bar{\theta}+\bar{r})}} = (h_{TB}h_{UT})'$$

, $(h_{TB}h_{UT})'$ represents a channel estimation value, preferably $(h_{TB}h_{UT})'$ is equal to $h_{TB}h_{UT}$, hereinafter, the channel estimation values are represented by $h_{TB}h_{UT}$.

At step 1109, the base station processes the first signal based on the channel estimation value and the time-varying second signal to obtain data reported by the tag.

Specifically, a third result is obtained by dividing a sample value of each sampling point of the baseband signal within a second duration by a channel estimation value. Based on the third result and the second phase parameter of the second signal within the second duration, an information symbol, that is, data reported by the third device, is obtained.

The duration of the first signal may be expressed as $T_S$, the first duration is expressed as $T_P$, then the second duration may be $T_S$ - $T_P$, assuming that the starting time of the time range of the baseband signal is expressed as 0, the value of each sampling point of the baseband signal within the second time length can be expressed as $Y_{BS}^{base\_band}(T_P:T_S)$. The second device divides the first signal within a second duration by the channel estimation value to obtain a second array, and the third result $e^{j*(\theta(T_P:T_S)+r(T_P:T_S))}$ can be expressed by the following formula:

$$e^{j*(\theta(T_P:T_S)+r(T_P:T_S))} = \frac{Y_{BS}^{base\_band}(T_P:T_S)}{h_{TB}h_{UT}}$$

. $\theta(T_P : T_S)$ + $r(T_P :T_S)$ is extracted from the third result, and the information symbol $r(T_P : T_S)$ is obtained by subtracting the second phase parameter $\theta(T_P :T_S)$ of the second signal within a second duration from $\theta(T_P:T_S)+r(T_P:T_S)$.

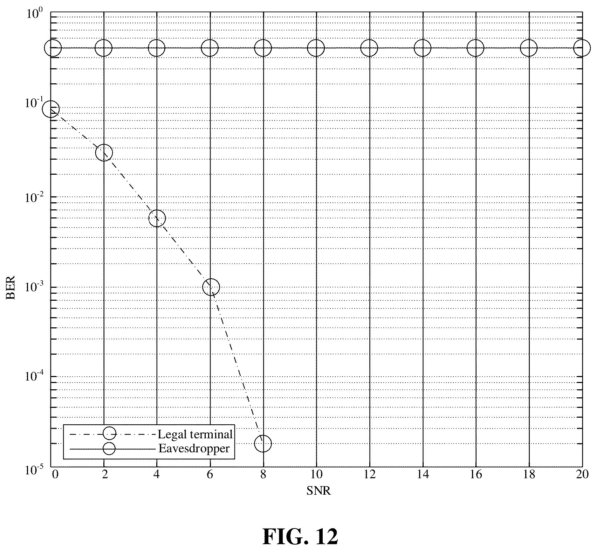

Next, with reference to FIG. 12, the result of simulation verification of the example provided in FIG. 11 above will be described, and in the simulation verification, the BER of parsing the tag information at the eavesdropper and the legal terminal are mainly compared. The channel model used in the simulation verification is the same as that of the foregoing example, and will not be repeated. It is assumed that the mapping set of tag under PSK is $r(t) \in \left\{0, \frac{\pi}{2}\right\}$, 0 represents a mapping value of 1 bit, $\frac{\pi}{2}$ represents a mapping value of 0 bit; the amplitude discrete set is taken as $\phi_1 = 0$, $\phi_2 = \frac{\pi}{2}$. The simulation results are illustrated in Fig. 12. It can be seen from Fig. 12 that at the same SNR, the BER of parsing tag information at the legal terminal (such as the base station in the example illustrated in Figure 11) is significantly lower than the eavesdropper. Specifically, it can be seen in FIG. 12 that under different SNRs, the BER of parsing the tag information at the eavesdropper is basically maintained at about 0.7. The higher the signal noise ratio, the lower the BER of the tag information parsed by legal terminal. For example, when the SNR of the legal terminal is 0, the BER of parsing tag information is about 0.1, and when the SNR reaches 8, the BER of parsing tag information is close to $10^{-5}$.

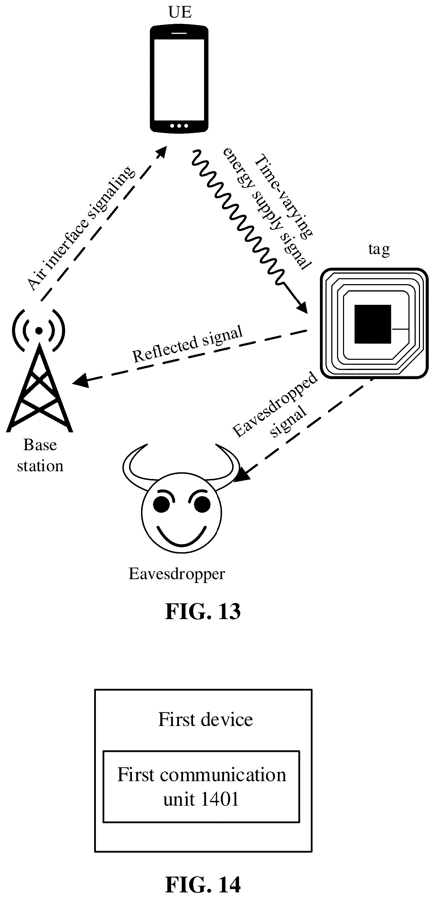

Referring to FIG. 13, taking the first device as a UE, the second device as a base station, and the third device as a tag as an example, a scenario-based example of the present embodiment is described: the base station and the UE may interact in advance through air interface signaling to obtain the same plurality of candidate generation parameters (or the same plurality of candidate generation parameters and the same plurality of selection indication values). When the UE needs to power and activate the tag, the UE determines a second parameter for each time period based on the plurality of candidate generation parameters, and generates a time-varying energy supply signal based on the second parameter for each time period. Tag modulates the uploaded data onto the time-varying energy supply signal to obtain a first signal, and reflects the first signal to the base station. The base station determines a second parameter for each time period based on the same plurality of candidate generation parameters as the UE, and generates a time-varying second signal based on the second parameter for each time period. The base station parses the first signal based on the second signal to obtain the data uploaded by the tag. In the above processing process, the air interface signaling interaction between the base station and the UE can be encrypted, so the eavesdropper cannot obtain a plurality of candidate generation parameters (or a plurality of candidate generation parameters and a plurality of selection indication values). The eavesdropper may be able to obtain the eavesdropped signal of the tag, that is, eavesdropped on the reflected signal of the tag, but since the reflected signal of the tag is modulated on the time-varying energy supply signal, the eavesdropper cannot correctly eliminate the influence of the channel in the reflected signal of the tag and the influence of different second parameters in different time periods because the eavesdropper does not have a plurality of candidate generation parameters.

It can be seen that by adopting the above scheme, the time-domain range of the energy supply signal sent by the first device includes a plurality of time periods, and the energy supply signal is generated by different second parameters in different time periods, therefore the energy supply signal sent by the first device is a time-varying energy supply signal, so that the eavesdropper cannot analyze the data modulated by the third device onto the energy supply signal because it cannot obtain the time-varying regularity of the energy supply signal, and the security of the data uploaded by the third device is ensured.

In addition, no additional technical means or overhead is required to adopt the above scheme. Especially for zero power consumption device, i.e., tag, without adding any redundant processes, tag only needs to perform simple reflection modulation without changing the technologies supported by the existing zero power consumption devices. From the perspective of the physical layer, it only needs to change some parameters of the energy supply signal, and there is no need for complex physical layer signal design, and secure communication can be achieved through low-complexity operations. Furthermore, in the related art, most zero power consumption secure communication means are still aimed at bidirectional communication interaction scenarios, and this embodiment solves the security problem of uplink signals in simplex communication links.

FIG. 14 is a schematic diagram of a composition and structure of a first device according to an embodiment of the present disclosure, including a first communication unit 1401.

The first communication unit 1401 is configured to send an energy supply signal to a third device, wherein a time-domain range of the energy supply signal includes a plurality of time periods, the energy supply signal is generated by different first parameters during different time periods in the plurality of time periods.

The energy supply signal is generated by an i-th first parameter within an i-th time period in the plurality of time periods, the i-th first parameter is one of a plurality of candidate generation parameters, and i is a positive integer.

The i-th first parameter is determined from the plurality of candidate generation parameters based on the i-th selection indication value in the plurality of selection indication values, wherein the i-th selection indication value is a positive integer less than or equal to a number of the plurality of candidate generation parameters.

The i-th selection indication value is used to indicate a target ranking position. The i-th first parameter is a candidate generation parameter located at the target ranking position in the plurality of candidate generation parameters.

The i-th first parameter is an i-th candidate generation parameter in the plurality of candidate generation parameters.

The plurality of candidate generation parameters are a plurality of candidate amplitude parameters or a plurality of candidate phase parameters.

The plurality of selection indication values are preset, or determined by the second device, or determined by the first device.

In case that the plurality of selection indication values are determined by the second device, the first communication unit is configured to receive a first indication information sent by the second device before sending the energy supply signal to the third device, and the first indication information carries the plurality of selection indication values.

In case that the plurality of selection indication values are determined by the first device, the first communication unit is configured to send a second indication information to the second device before sending the energy supply signal to the third device, and the second indication information carries the plurality of selection indication values.

The plurality of candidate generation parameters are preset, or determined by the second device, or determined by the first device.

In case that the plurality of candidate generation parameters are determined by the second device, the first communication unit is configured to receive a third indication information sent by the second device before sending the energy supply signal to the third device, and the third indication information carries the plurality of candidate generation parameters.

In case that the plurality of candidate generation parameters are determined by the first device, the first communication unit is configured to send a fourth indication information to the second device before sending the energy supply signal to the third device, the fourth indication information carries the plurality of candidate generation parameters.

In the plurality of time periods, the duration of each time period is preset, or determined by the second device, or determined by the first device.

The duration of each of the plurality of time periods is related to the reciprocal of the information modulation rate of the third device in case that the duration of each of the plurality of time periods is preset.

In case that the duration of each of the plurality of time periods is determined by the second device, the first communication unit is configured to receive a fifth indication information sent by the second device before sending the energy supply signal to the third device, and the fifth indication information is used to determine the duration of each of the plurality of time periods.

In case that the duration of each of the plurality of time periods is determined by the first device, the first communication unit is configured to send a sixth indication information to the second device before sending the energy supply signal to the third device, the sixth indication information is used to determine the duration of each of the plurality of time periods.

The second device is a network device. The first device is a terminal device, and the third device is a zero power consumption device.

The first device according to the embodiment of the present disclosure can realize the corresponding function of the first device in the above-described method embodiment. In addition, the first device may further include a first processing unit configured to perform processing such as selecting a first parameter and generating an energy supply signal performed by the first device in the communication method. The corresponding flows, functions, implementations, and beneficial effects of each module (sub-module, unit, component, etc.) in the first device can be described in the corresponding description in the above-described method embodiment, and will not be repeatedly described here. The functions described with respect to each module (sub-module, unit, component, etc.) in the first device of the application embodiment may be implemented by different modules (sub-module, unit, component, etc.), or may be implemented by the same module (sub-module, unit, component, etc.).

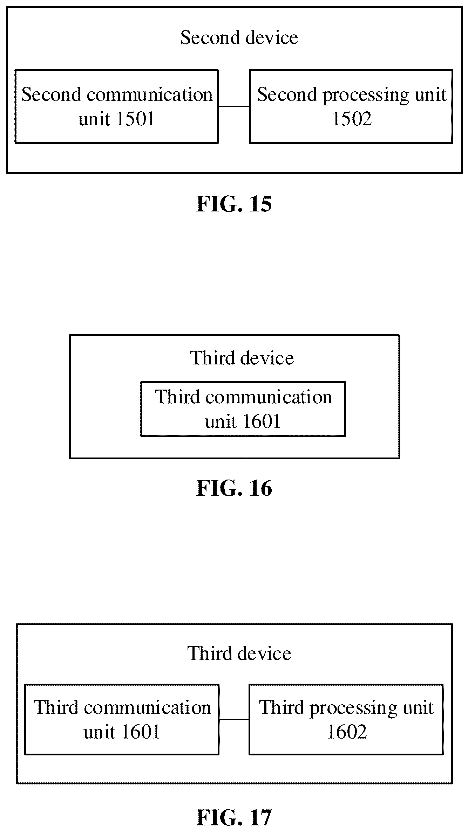

FIG. 15 is a schematic diagram of a composition and structure of a second device according to an embodiment of the present disclosure, including a second communication unit 1501 and a second processing unit 1502.

The second communication unit 1501 is configured to receive a first signal transmitted by a third device.

The second processing unit 1502 is configured to process the first signal based on a second signal to obtain data reported by the third device, wherein a duration of the second signal comprises a plurality of time periods, the second signal is generated by different second parameters during different time periods in the plurality of time periods.

The second processing unit is configured to obtain a channel estimation value based on a sample value of the first signal within a first duration, shared information and a second parameter of the second signal within the first duration, wherein the first duration is a duration of the shared information in the first signal; and process the first signal based on the channel estimation value and the second signal to obtain data reported by the third device.

The second signal is generated by an $i$-th second parameter within an $i$-th time period in the plurality of time periods, the $i$-th second parameter is one of a plurality of candidate generation parameters, and $i$ is a positive integer.

The $i$-th second parameter is selected from the plurality of candidate generation parameters based on the $i$-th selection indication value among the plurality of selection indication values. The $i$-th selection indication value is a positive integer less than or equal to a number of the plurality of candidate generation parameters.

The $i$-th selection indication value is used to indicate a target ranking position. The $i$-th second parameter is a candidate generation parameter located at the target ranking position in the plurality of candidate generation parameters.

The $i$-th second parameter is an $i$-th candidate generation parameter in the plurality of candidate generation parameters.

The plurality of candidate generation parameters are a plurality of candidate amplitude parameters or a plurality of candidate phase parameters.

The plurality of selection indication values are preset, determined by the first device, or determined by the second device.

In case that the plurality of selection indication values are determined by the second device, the second communication unit is configured to send a first indication information to the first device before receiving the first signal sent by the third device, and the first indication information carries the plurality of selection indication values.

In case that the plurality of selection indication values are determined by the first device, the second communication unit is configured to receive a second indication information sent by the first device before receiving the first signal sent by the third device, and the second indication information carries the plurality of selection indication values.

The plurality of candidate generation parameters are preset, or determined by the second device, or determined by the first device.

In case that the plurality of candidate generation parameters are determined by the second device, the second communication unit is configured to send a third indication information to the first device before receiving the first signal sent by the third device, and the third indication information carries the plurality of candidate generation parameters.

In case that the plurality of candidate generation parameters are determined by the first device, the second communication unit is configured to receive a fourth indication information sent by the first device before receiving the first signal sent by the third device, and the fourth indication information carries the plurality of candidate generation parameters.

In the plurality of time periods, the duration of each time period is preset, or determined by the second device, or determined by the first device.

The duration of each of the plurality of time periods is equal to a reciprocal of an information modulation rate of the third device in case that the duration of each of the plurality of time periods is preset.

In case that the duration of each of the plurality of time periods is determined by the second device, the second communication unit is configured to send a fifth indication information to the first device before receiving the first signal sent by the third device, and the fifth indication information is used to determine the duration of each of the plurality of time periods.

In case that the duration of each of the plurality of time periods is determined by the first device, the second communication unit is configured to receive a sixth indication information sent by the first device before receiving the first signal sent by the third device, and the sixth indication information is used to determine the duration of each of the plurality of time periods.

The first device is a terminal device. The second device is a network device, and the third device is a zero power consumption device.

The second device according to the embodiment of the present disclosure can realize the corresponding function of the second device according to the embodiment of the information verification method described above. The corresponding flows, functions, implementation methods, and beneficial effects of each module (sub-module, unit, component, etc.) in the second device can be described in the corresponding description in the above-described method embodiment, and will not be repeatedly described here. Note that the functions described with respect to each module (sub-module, unit, component, etc.) in the second device of the application embodiment may be implemented by different modules (sub-module, unit, component, etc.), or may be implemented by the same module (sub-module, unit, component, etc.).

FIG. 16 is a third device according to an embodiment of the present disclosure, including a third communication unit 1601.

The third communication unit 1601 is configured to receive an energy supply signal sent by a first device, wherein a time-domain range of the energy supply signal includes a plurality of time periods, the energy supply signal is generated by different first parameters during different time periods in the plurality of time periods; and send a first signal to a second device, wherein the first signal carries data reported by the third device.

On the basis of FIG. 16, as illustrated in FIG. 17, the third device further comprises a third processing unit 1602.

The third processing unit 1602 is configured to modulate the reported data onto the energy supply signal to obtain the first signal.

The first parameter is an amplitude parameter or a phase parameter.

In case that the first parameter is the amplitude parameter, the third processing unit is configured to adopt an amplitude modulation manner to modulate the reported data onto the energy supply signal to obtain the first signal.

In case that the first parameter is the phase parameter, the third processing unit is configured to adopt a phase modulation manner to modulate the reported data onto the energy supply signal to obtain the first signal.

The first device is a terminal device, the second device is a network device, and the third device is a zero power consumption terminal.

The third device according to the embodiment of the present disclosure can realize the corresponding function of the third device according to the embodiment of the information verification method described above. The corresponding flows, functions, implementations, and beneficial effects of each module (sub-module, unit, component, etc.) in the third device can be described in the corresponding description in the above-described method embodiment, and will not be repeatedly described here. Note that the functions described with respect to each module (sub-module, unit, component, etc.) in the third device of the application embodiment may be implemented by different modules (sub-module, unit, component, etc.), or may be implemented by the same module (sub-module, unit, component, etc.).

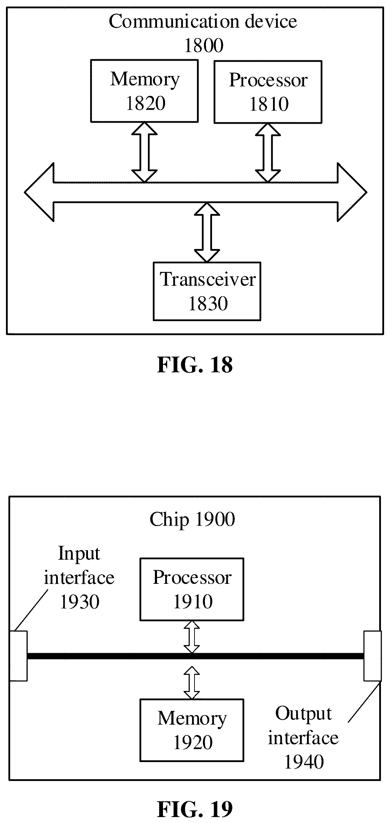

FIG. 18 is a schematic structural diagram of a communication device 1800 according to an embodiment of the present disclosure. The communication device 1800 includes a processor 1810 that can call and execute a computer program in a memory to cause the communication device 1800 to implement the method in the embodiment of the present disclosure.

In a possible implementation, the communication device 1800 may further include a memory 1820. The processor 1810 may call and execute a computer program in the memory 1820 to cause the communication device 1800 to implement the method in the embodiment of the present disclosure.

The memory 1820 may be a separate device independent of the processor 1810 or may be integrated in the processor 1810.

In a possible implementation, the communication device 1800 may further include a transceiver 1830, and the processor 1810 may control the transceiver 1830 to communicate with other devices. The processor may control the transceiver to transmit information or data to other devices or receive information or data transmitted by other devices.

The transceiver 1830 may include a transmitter and a receiver. The transceiver 1830 may further include antennas, and the number of antennas may be one or more.

In a possible implementation, the communication device 1800 may be the first device of the embodiment of the present disclosure, and the communication device 1800 may implement corresponding flows implemented by the first device in each method of the embodiment of the present disclosure, and will not be repeatedly described here for the sake of simplicity. In a possible implementation, the communication device 1800 may be the second device of the embodiment of the present disclosure, and the communication device 1800 may implement corresponding flows implemented by the second device in each method of the embodiment of the present disclosure, and will not be repeatedly described here for the sake of simplicity. In a possible implementation, the communication device 1800 may be the third device of the embodiment of the present disclosure, and the communication device 1800 may implement the corresponding flows implemented by the third device in each method of the embodiment of the present disclosure, and will not be repeatedly described here for the sake of simplicity.

FIG. 19 is a schematic structural diagram of a chip 1900 according to an embodiment of the present disclosure. The chip 1900 includes a processor 1910, which can call and execute a computer program from a memory to implement the method in the embodiment of the present disclosure.

In a possible implementation, the chip 1900 may further include a memory 1920. The processor 1910 may call and execute a computer program from the memory 1920 to implement the method executed by an access network device or a first core network device in the embodiment of the present disclosure. The memory 1920 may be a separate device independent of the processor 1910 or may be integrated in the processor 1910.

In a possible implementation, the chip 1900 may further include an input interface 1930. The processor 1910 may control the input interface 1930 to communicate with other devices or chips, specifically, the processor may control the input interface to acquire information or data transmitted by other devices or chips. In a possible implementation, the chip 1900 may further include an output interface 1940. The processor 1910 may control the output interface 1940 to communicate with other devices or chips, specifically, the processor may control the output interface to output information or data to other devices or chips.

In a possible implementation, the chip can be applied to the third device in the embodiment of the present disclosure, and the chip can implement the corresponding flows implemented by the third device in each method of the embodiment of the present disclosure, and will not be repeatedly described here for the sake of simplicity. In a possible implementation, the chip can be applied to the first device in the embodiment of the present disclosure, and the chip can implement corresponding flows implemented by the first device in each method of the embodiment of the present disclosure, and will not be repeatedly described here for the sake of simplicity. In a possible implementation, the chip can be applied to the second device in the embodiment of the present disclosure, and the chip can implement corresponding flows implemented by the second device in each method of the embodiment of the present disclosure, and will not be repeatedly described here for the sake of simplicity. The chips applied to the third device, the first device, and the second device may be the same chip or different chips.

It should be understood that the chip mentioned in the embodiments of the present disclosure may also be referred to as a system-level chip, a system-on-chip, a chip system, or a system-on-chip chip.

The processor mentioned above may be a general-purpose processor, a digital signal processor (DSP), a field programmable gate array (FPGA), an application specific integrated circuit (ASIC), or other programmable logic device, a transistor logic device, a discrete hardware component, and the like. The general-purpose processor mentioned above may be a microprocessor or any conventional processor and the like.

The memory mentioned above may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is an exemplary but not restrictive, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is, the memory in the embodiments of the present disclosure is intended to include, but is not limited to, these and any other suitable type of memory.

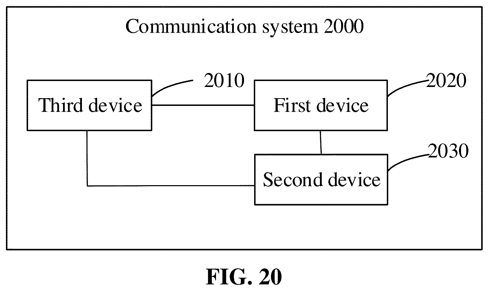

FIG. 20 is a schematic block diagram of a communication system 2000 according to an embodiment of the present disclosure. The communication system 2000 includes a third device 2010, a first device 2020 and a second device 2030. The third device 2010 may be used to implement the corresponding functions implemented by the third device in the above-described method, and the first device 2020 may be used to implement the corresponding functions implemented by the first device in the above-described method. The second device 2030 may be used to implement the corresponding functions implemented by the second device in the method described above. For the sake of simplicity, it will not be repeated here.

The embodiments described above may be implemented in whole or in part by software, hardware, firmware, or any combination thereof. When implemented by using software, the embodiments may be implemented in whole or in part in the form of a computer program product. The computer program product includes one or more computer instructions. When the computer program instructions are loaded and executed on a computer, the flows or functions according to the embodiments of the present disclosure are generated in whole or in part. The computer may be a general purpose computer, a special purpose computer, a computer network, or other programmable device. The computer instructions may be stored in a computer readable storage medium or transferred from one computer readable storage medium to another computer readable storage medium, the computer instructions may be transmitted from one website site, computer, server, or data center to another website site, computer, server, or data center in wired (e.g., a coaxial cable, an optical fiber, a digital subscriber line (DSL)) or wireless (e.g., infrared, wireless, microwave, etc.) manner. The computer-readable storage medium may be any available medium accessible by a computer or a data storage device such as a server, a data center, and the like that integrates one or more available mediums. The available medium may be a magnetic medium (e.g., a floppy disk, a hard disk, a magnetic tape), an optical medium (e.g., a DVD), or a semiconductor medium (e.g., a solid state disk (SSD)), and the like.

It should be understood that in various embodiments of the present disclosure, the sequence numbers of the above-described flows do not mean the execution sequence, and the execution sequence of each process should be determined by its function and internal logic, and should not constitute any limitation on the implementation of the embodiments of the present disclosure.

Those skilled in the art can clearly understand that, for convenience and conciseness of the description, regarding the specific operation processes of the systems, devices, and units described above, reference may be made to the corresponding processes in the above-described method embodiments, and will not be repeatedly described herein.

The above are merely specific embodiments of the present disclosure, but the scope of protection of the present disclosure is not limited thereto, and changes or substitutions easily conceived by any person skilled in the art within the technical scope disclosed in the present disclosure should fall within the scope of protection of the present disclosure. Therefore, the scope of protection of the present disclosure should be subject to the scope of protection of the claims.

**Claims**

1. A communication method, comprising:
   sending, by a first device, an energy supply signal to a third device, wherein a time-domain range of the energy supply signal comprises a plurality of time periods, the energy supply signal is generated by different first parameters during different time periods in the plurality of time periods.

2. The method of claim 1, wherein the energy supply signal is generated by an i-th first parameter within an i-th time period in the plurality of time periods, the i-th first parameter is one of a plurality of candidate generation parameters, and i is a positive integer.

3. The method of claim 2, wherein the i-th first parameter is determined from the plurality of candidate generation parameters based on an i-th selection indication value in a plurality of selection indication values;
   wherein the i-th selection indication value is a positive integer less than or equal to a number of the plurality of candidate generation parameters.

4. The method of claim 3, wherein the i-th selection indication value is used to indicate a target ranking position;
   the i-th first parameter is a candidate generation parameter located at the target ranking position in the plurality of candidate generation parameters.

5. The method of claim 2, wherein the i-th first parameter is an i-th candidate generation parameter in the plurality of candidate generation parameters.

6. The method of any one of claims 2 to 5, wherein the plurality of candidate generation parameters are a plurality of candidate amplitude parameters or a plurality of candidate phase parameters.

7. The method of claim 3 or 4, wherein the plurality of selection indication values are preset, or determined by a second device, or determined by the first device.

8. The method of claim 7, wherein in case that the plurality of selection indication values are determined by the second device, before sending, by the first device, the energy supply signal to the third device, the method further comprises:
   receiving, by the first device, a first indication information sent by the second device, wherein the first indication information carries the plurality of selection indication values.

9. The method of claim 7, wherein in case that the plurality of selection indication values are determined by the first device, before sending, by the first device, the energy supply signal to the third device, the method further comprises:
   sending, by the first device, a second indication information to a second device, wherein the second indication information carries the plurality of selection indication values.

10. The method of any one of claims 2 to 6, wherein the plurality of candidate generation parameters are preset, or determined by a second device, or determined by the first device.

11. The method of claim 10, wherein in case that the plurality of candidate generation parameters are determined by the second device, before sending, by the first device, the energy supply signal to the third device, the method further comprises:
receiving, by the first device, a third indication information sent by the second device, wherein the third indication information carries the plurality of candidate generation parameters.

12. The method of claim 10, wherein in case that the plurality of candidate generation parameters are determined by the first device, before sending, by the first device, the energy supply signal to the third device, the method further comprises:
sending, by the first device, a fourth indication information to the second device, wherein the fourth indication information carries the plurality of candidate generation parameters.

13. The method of any one of claims 1 to 12, wherein a duration of each of the plurality of time periods is preset, or determined by the second device, or determined by the first device.

14. The method of claim 13, wherein the duration of each of the plurality of time periods is related to a reciprocal of an information modulation rate of the third device in case that the duration of each of the plurality of time periods is preset.

15. The method of claim 13, wherein in case that the duration of each of the plurality of time periods is determined by the second device, before sending, by the first device, the energy supply signal to the third device, the method further comprises:
receiving, by the first device, a fifth indication information sent by the second device, wherein the fifth indication information is used to determine the duration of each of the plurality of time periods.

16. The method of claim 13, wherein in case that the duration of each of the plurality of time periods is determined by the first device, before sending, by the first device, the energy supply signal to the third device, the method further comprises:
sending, by the first device, a sixth indication information to the second device, wherein the sixth indication information is used to determine the duration of each of the plurality of time periods.

17. The method of any one of claims 7 to 16, wherein the second device is a network device.

18. The method of any one of claims 1 to 17, wherein the first device is a terminal device, the third device is a zero power consumption device.

19. A communication method, comprising:

receiving, by a second device, a first signal sent by a third device; and
processing, by the second device, the first signal based on a second signal to obtain data reported by the third device, wherein a duration of the second signal comprises a plurality of time periods, the second signal is generated by different second parameters during different time periods in the plurality of time periods.

20. The method of claim 19, wherein processing, by the second device, the first signal based on the second signal to obtain the data reported by the third device comprises:

obtaining, by the second device, a channel estimation value based on a sample value of the first signal within a first duration, shared information and a second parameter of the second signal within the first duration, wherein the first duration is a duration of the shared information in the first signal; and
processing, by the second device, the first signal based on the channel estimation value and the second signal to obtain the data reported by the third device.

21. The method of claim 20, wherein the second signal is generated by an i-th second parameter within an i-th time period in the plurality of time periods, the i-th second parameter is one of a plurality of candidate generation parameters, and i is a positive integer.

22. The method of claim 21, wherein the i-th second parameter is selected from the plurality of candidate generation parameters based on an i-th selection indication value in a plurality of selection indication values;
wherein the i-th selection indication value is a positive integer less than or equal to a number of the plurality of candidate generation parameters.

23. The method of claim 22, wherein the i-th selection indication value is used to indicate a target ranking position;
the i-th second parameter is a candidate generation parameter located at the target ranking position in the plurality of candidate generation parameters.

24. The method of claim 21, wherein the i-th second parameter is an i-th candidate generation parameter in the plurality of candidate generation parameters.

**25.** The method of any one of claims 21 to 24, wherein the plurality of candidate generation parameters are a plurality of candidate amplitude parameters or a plurality of candidate phase parameters.

**26.** The method of claim 22 or 23, wherein the plurality of selection indication values are preset, or determined by a first device, or determined by the second device.

**27.** The method of claim 26, wherein in case that the plurality of selection indication values are determined by the second device, before receiving, by the second device, the first signal sent by the third device, the method further comprises:
sending, by the second device, a first indication information to the first device, wherein the first indication information carries the plurality of selection indication values.

**28.** The method of claim 26, wherein in case that the plurality of selection indication values are determined by the first device, before receiving, by the second device, the first signal sent by the third device, the method further comprises:
receiving, by the second device, a second indication information sent by the first device, wherein the second indication information carries the plurality of selection indication values.

**29.** The method of any one of claims 21 to 25, wherein the plurality of candidate generation parameters are preset, or determined by the second device, or determined by a first device.

**30.** The method of claim 29, wherein in case that the plurality of candidate generation parameters are determined by the second device, before receiving, by the second device, the first signal sent by the third device, the method further comprises:
sending, by the second device, a third indication information to the first device, wherein the third indication information carries the plurality of candidate generation parameters.

**31.** The method of claim 29, wherein in case that the plurality of candidate generation parameters are determined by the first device, before receiving, by the second device, the first signal sent by the third device, the method further comprises:
receiving, by the second device, a fourth indication information sent by the first device, wherein the fourth indication information carries the plurality of candidate generation parameters.

**32.** The method of any one of claims 19 to 31, wherein a duration of each of the plurality of time periods is preset, or determined by the second device, or determined by the first device.

**33.** The method of claim 32, wherein the duration of each of the plurality of time periods is equal to a reciprocal of an information modulation rate of the third device in case that the duration of each of the plurality of time periods is preset.

**34.** The method of claim 32, wherein in case that the duration of each of the plurality of time periods is determined by the second device, before receiving, by the second device, the first signal sent by the third device, the method further comprises:
sending, by the second device, a fifth indication information to the first device, wherein the fifth indication information is used to determine the duration of each of the plurality of time periods.

**35.** The method of claim 32, wherein in case that the duration of each of the plurality of time periods is determined by the first device, before receiving, by the second device, the first signal sent by the third device, the method further comprises:
receiving, by the second device, a sixth indication information sent by the first device, wherein the sixth indication information is used to determine the duration of each of the plurality of time periods.

**36.** The method of any one of claims 26 to 35, wherein the first device is a terminal device.

**37.** The method of any one of claims 19 to 35, wherein the second device is a network device, the third device is a zero power consumption device.

**38.** A communication method, comprising:

receiving, by a third device, an energy supply signal sent by a first device, wherein a time-domain range of the energy supply signal comprises a plurality of time periods, the energy supply signal is generated by different first parameters during different time periods in the plurality of time periods; and
sending, by the third device, a first signal to a second device, wherein the first signal carries data reported by the third device.

**39.** The method of claim 38, wherein before sending, by the third device, the first signal to the second device, the method further comprises:
modulating, by the third device, the reported data onto the energy supply signal to obtain the first signal.

**40.** The method of claim 39, wherein the first parameter is an amplitude parameter or a phase parameter.

**41.** The method of claim 40, wherein in case that the first parameter is the amplitude parameter, modulating, by the third device, the reported data onto the energy supply signal to obtain the first signal comprises: adopting, by the third device, an amplitude modulation manner to modulate the reported data onto the energy supply signal to obtain the first signal.

42. The method of claim 40, wherein in case that the first parameter is the phase parameter, modulating, by the third device, the reported data onto the energy supply signal to obtain the first signal comprises: adopting, by the third device, a phase modulation manner to modulate the reported data onto the energy supply signal to obtain the first signal.

43. The method of any one of claims 38 to 42, wherein the first device is a terminal device, the second device is a network device, and the third device is a zero power consumption device.

44. A first device, comprising:
a first communication unit configured to send an energy supply signal to a third device, wherein a time-domain range of the energy supply signal comprises a plurality of time periods, the energy supply signal is generated by different first parameters during different time periods in the plurality of time periods.

45. The first device of claim 44, wherein the energy supply signal is generated by an i-th first parameter within an i-th time period in the plurality of time periods, the i-th first parameter is one of a plurality of candidate generation parameters, and i is a positive integer.

46. The first device of claim 45, wherein the i-th first parameter is determined from the plurality of candidate generation parameters based on an i-th selection indication value in a plurality of selection indication values, and the i-th selection indication value is a positive integer less than or equal to a number of the plurality of candidate generation parameters.

47. The first device of claim 46, wherein the i-th selection indication value is used to indicate a target ranking position, the i-th first parameter is a candidate generation parameter located at the target ranking position in the plurality of candidate generation parameters.

48. The first device of claim 45, wherein the i-th first parameter is an i-th candidate generation parameter in the plurality of candidate generation parameters.

49. The first device of any one of claims 45 to 48, wherein the plurality of candidate generation parameters are a plurality of candidate amplitude parameters or a plurality of candidate phase parameters.

50. The first device of claim 46 or 47, wherein the plurality of selection indication values are preset, or determined by a second device, or determined by the first device.

51. The first device of claim 50, wherein in case that the plurality of selection indication values are determined by the second device, the first communication unit is configured to receive a first indication information sent by the second device before sending the energy supply signal to the third device, and the first indication information carries the plurality of selection indication values.

52. The first device of claim 50, wherein in case that the plurality of selection indication values are determined by the first device, the first communication unit is configured to send a second indication information to the second device before sending the energy supply signal to the third device, and the second indication information carries the plurality of selection indication values.

53. The first device of any one of claims 45 to 49, wherein the plurality of candidate generation parameters are preset, or determined by a second device, or determined by the first device.

54. The first device of claim 53, wherein in case that the plurality of candidate generation parameters are determined by the second device, the first communication unit is configured to receive a third indication information sent by the second device before sending the energy supply signal to the third device, and the third indication information carries the plurality of candidate generation parameters.

55. The first device of claim 53, wherein in case that the plurality of candidate generation parameters are determined by the first device, the first communication unit is configured to send a fourth indication information to the second device before sending the energy supply signal to the third device, the fourth indication information carries the plurality of candidate generation parameters.

56. The first device of any one of claims 44 to 55, wherein a duration of each of the plurality of time periods is preset, or determined by the second device, or determined by the first device.

57. The first device of claim 56, wherein in case that the duration of each of the plurality of time periods is preset, the duration of each of the plurality of time periods is related to a reciprocal of an information modulation rate of the third device.

58. The first device of claim 56, wherein in case that the duration of each of the plurality of time periods is determined by the second device, the first communication unit is configured to receive a fifth indication information sent by the second device before sending the energy supply signal to the third device, and the fifth indication information is used to determine the duration of each of the plurality of time periods.

59. The first device of claim 56, wherein in case that the duration of each of the plurality of time periods is determined by the first device, the first communication unit is configured to send a sixth indication information to the second device before sending the energy supply signal to the third device, wherein the sixth indication information is used to determine the duration of each of the plurality of time periods.

60. The first device of any one of claims 50 to 59, wherein the second device is a network device.

61. The first device of any one of claims 44 to 60, wherein the first device is a terminal device, the third device is a zero power consumption device.

62. A second device, comprising:

a second communication unit configured to receive a first signal sent by a third device; and
a second processing unit configured to process the first signal based on a second signal to obtain data reported by the third device, wherein a duration of the second signal comprises a plurality of time periods, the second signal is generated by different second parameters during different time periods in the plurality of time periods.

63. The second device of claim 62, wherein the second processing unit is configured to obtain a channel estimation value based on a sample value of the first signal within a first duration, shared information and a second parameter of the second signal within the first duration, wherein the first duration is a duration of the shared information in the first signal; and process the first signal based on the channel estimation value and the second signal to obtain data reported by the third device.

64. The second device of claim 63, wherein the second signal is generated by an i-th second parameter within an i-th time period in the plurality of time periods, the i-th second parameter is one of a plurality of candidate generation parameters, and i is a positive integer.

65. The second device of claim 64, wherein the i-th second parameter is selected from the plurality of candidate generation parameters based on an i-th selection indication value in a plurality of selection indication values, and the i-th selection indication value is a positive integer less than or equal to a number of the plurality of candidate generation parameters.

66. The second device of claim 65, wherein the i-th selection indication value is used to indicate a target ranking position, the i-th second parameter is a candidate generation parameter located at the target ranking position in the plurality of candidate generation parameters.

67. The second device of claim 64, wherein the i-th second parameter is an i-th candidate generation parameter in the plurality of candidate generation parameters.

68. The second device of any one of claims 64 to 67, wherein the plurality of candidate generation parameters are a plurality of candidate amplitude parameters or a plurality of candidate phase parameters.

69. The second device of claim 65 or 66, wherein the plurality of selection indication values are preset, or determined by a first device, or determined by the second device.

70. The second device of claim 69, wherein in case that the plurality of selection indication values are determined by the second device, the second communication unit is configured to send a first indication information to the first device before receiving the first signal sent by the third device, and the first indication information carries the plurality of selection indication values.

71. The second device of claim 69, wherein in case that the plurality of selection indication values are determined by the first device, the second communication unit is configured to receive a second indication information sent by the first device before receiving the first signal sent by the third device, and the second indication information carries the plurality of selection indication values.

72. The second device of any one of claims 64 to 68, wherein the plurality of candidate generation parameters are preset, or determined by the second device, or determined by a first device.

73. The second device of claim 72, wherein in case that the plurality of candidate generation parameters are determined by the second device, the second communication unit is configured to send a third indication information to the first device before receiving the first signal sent by the third device, and the third indication information carries the plurality of candidate generation parameters.

74. The second device of claim 72, wherein in case that the plurality of candidate generation parameters are determined by the first device, the second communication unit is configured to receive a fourth indication information sent by the first device before receiving the first signal sent by the third device, and the fourth indication information carries the plurality of candidate generation parameters.

75. The second device of any one of claims 62 to 74, wherein a duration of each of the plurality of time periods is preset, or determined by the second device, or determined by the first device.

76. The second device of claim 75, wherein the duration of each of the plurality of time periods is equal to a reciprocal of an information modulation rate of the third device in case that the duration of each of the plurality of time periods is preset.

77. The second device of claim 75, wherein in case that the duration of each of the plurality of time periods is determined by the second device, the second communication unit is configured to send a fifth indication information to the first device before receiving the first signal sent by the third device, and the fifth indication information is used to determine the duration of each of the plurality of time periods.

78. The second device of claim 75, wherein in case that the duration of each of the plurality of time periods is determined by the first device, the second communication unit is configured to receive a sixth indication information sent by the first device before receiving the first signal sent by the third device, and the sixth indication information is used to determine the duration of each of the plurality of time periods.

79. The second device of any one of claims 69 to 78, wherein the first device is a terminal device.

80. The second device of any one of claims 62 to 78, wherein the second device is a network device, the third device is a zero power consumption device.

81. A third device, comprising:
a third communication unit configured to receive an energy supply signal sent by a first device, wherein a time-domain range of the energy supply signal comprises a plurality of time periods, the energy supply signal is generated by different first parameters during different time periods in the plurality of time periods; and send a first signal to a second device, wherein the first signal carries data reported by the third device.

82. The third device of claim 81, further comprising:
a third processing unit configured to modulate the reported data onto the energy supply signal to obtain the first signal.

83. The third device of claim 82, wherein the first parameter is an amplitude parameter or a phase parameter.

84. The third device of claim 83, wherein in case that the first parameter is the amplitude parameter, the third processing unit is configured to adopt an amplitude modulation manner to modulate the reported data onto the energy supply signal to obtain the first signal.

85. The third device of claim 83, wherein in case that the first parameter is the phase parameter, the third processing unit is configured to adopt a phase modulation manner to modulate the reported data onto the energy supply signal to obtain the first signal.

86. The third device of any one of claims 81 to 85, wherein the first device is a terminal device, the second device is a network device, and the third device is a zero power consumption terminal.

87. A first device, comprising a transceiver, a memory for storing a computer program, and a processor for calling and executing the computer program stored in the memory, to cause the first device to perform the method of any one of claims 1 to 18.

88. A second device, comprising a transceiver, a memory for storing a computer program, and a processor for calling and executing the computer program stored in the memory, to cause the second device to perform the method of any one of claims 19 to 37.

89. A third device, comprising a transceiver, a memory for storing a computer program, and a processor for calling and executing the computer program stored in the memory, to cause the second device to perform the method of any one of claims 38 to 43.

90. A chip, comprising a processor for calling and executing a computer program in a memory, to cause a device on which the chip is mounted to perform the method of any one of claims 1 to 18, or the method of any one of claims 19 to 37, or the method of any one of claims 38 to 43.

91. A computer-readable storage medium, having stored thereon a computer program that, when being run by a device, causes the device to perform the method of any one of claims 1 to 18, or the method of any one of claims 19 to 37, or the method of any one of claims 38 to 43.

**92.** A computer program product, comprising computer program instructions that cause a computer to perform the method of any one of claims 1 to 18, or the method of any one of claims 19 to 37, or the method of any one of claims 38 to 43.

**93.** A computer program that causes a computer to perform the method of any one of claims 1 to 18, or the method of any one of claims 19 to 37, or the method of any one of claims 38 to 43.

100

FIG. 1

FIG. 2

Case 2: Zero power consumption sidelink communication powered/triggered by the network

Case 1: Zero power consumption communication auxiliarily powered/ triggered by the terminal

Backscatter

Powered/ Triggered

Air interface data

Air interface signaling

Backscatter

Air interface signaling

Only triggered

Air interface signaling

Powered/ Triggered

Only powered

Backscatter

Air interface data

Backscatter

Case 3: Zero power communication auxiliarily powered by the terminal

Case 4: Zero power consumption sidelink communication controlled by the network

Backscatter ----▶    Powered /\/\/\/\    Triggered ———▶    Air interface signaling/data – – ▶

**FIG. 3**

A first device sends an energy supply signal to a third device, wherein a time-domain range of the energy supply signal includes a plurality of time periods, the energy supply signal is generated by different first parameters during different time periods in the plurality of time periods    ⌐ S410

**FIG. 4**

A second device receives a first signal sent by a third device — S510

The second device processes the first signal based on a second signal to obtain data reported by the third device, wherein a duration of the second signal includes a plurality of time periods, the second signal is generated by different second parameters during different time periods in the plurality of time periods — S520

**FIG. 5**

A third device receives an energy supply signal sent by a first device, wherein a time-domain range of the energy supply signal includes a plurality of time periods, the energy supply signal is generated by different first parameters during different time periods in the plurality of time periods — S610

The third device sends a first signal to a second device, wherein the first signal carries data reported by the third device — S620

**FIG. 6**

| Base station | tag | UE |
|---|---|---|

701: A shared discrete set is preset for a base station and a UE, and the discrete set includes a plurality of candidate generation parameters

702: The UE determines a first parameter in each time period based on a ranking of a plurality of candidate generation parameters, and generates a time-varying energy supply signal based on the first parameter in each time period

703: The UE sends the time-varying energy supply signal to the tag

705: The base station receives the first signal

704: Modulating

706: The base station determines a second parameter in each time period based on the ranking of the plurality of candidate generation parameters, and generates a time-varying second signal based on the second parameter in each time period

707: The base station obtains a channel estimation value based on a sample value of the first signal within a first time duration, a shared information, and a second parameter of a time-varying second signal within the first time duration

708: The base station processes the first signal based on the channel estimation value and the time-varying second signal to obtain data reported by the tag

**FIG. 7**

| Base station | tag | UE |
|---|---|---|

801: A shared discrete set is preset for a base station and a UE, and the discrete set includes a plurality of candidate generation parameters

802: The base station and the UE determine an indication value sequence through signaling interaction, and the indication value sequence includes a plurality of selection indication values

803: The UE determines a first parameter in each time period from a plurality of candidate generation parameters based on each of the plurality of selection indication values, and generates a time-varying energy supply signal based on the first parameter in each time period

804: The UE sends the time-varying energy supply signal to the tag

806: The base station receives the first signal

805: Modulating

807: The base station determines a second parameter in each time period from a plurality of candidate generation parameters based on each of the plurality of selection indication values, and generates a time-varying second signal based on the second parameter in each time period

808: The base station obtains a channel estimation value based on a sample value of a first signal within a first time duration, a shared information, and a second parameter of the time-varying second signal within the first time duration

809: The base station processes the first signal based on the channel estimation value and the time-varying second signal to obtain data reported by the tag

**FIG. 8**

Base
station

tag

UE

901: A shared discrete set is preset for a base station and a UE, and the discrete
set includes a plurality of candidate amplitude parameters

902: The base station and the UE determine an indication value sequence
through signaling interaction, and the indication value sequence includes a
plurality of selection indication values

903: The UE determines a first amplitude
parameter in each time period from a
plurality of candidate amplitude parameters
based on each of the plurality of selection
indication values, and generates a time-
varying energy supply signal based on the
first amplitude parameter in each time period

904: The UE sends the
time-varying energy
supply signal to the tag

906: The base station
receives the first signal

905: ASK
Modulation

907: The base station determines a second
amplitude parameter in each time period from
a plurality of candidate amplitude parameters
based on each of the plurality of selection
indication values, and generates a time-
varying second signal based on the second
amplitude parameter in each time period

908: The base station obtains a channel
estimation value based on a sample value of a
first signal within a first time duration, a
shared information, and a second parameter of
the time-varying second signal within the first
time duration

909: The base station processes the first signal
based on the channel estimation value and the
time-varying second signal to obtain data
reported by the tag

**FIG. 9**

FIG. 10

| Base station | | tag | | UE |
|---|---|---|---|---|

1101: A shared discrete set is preset for a base station and a UE, and the phase discrete set includes a plurality of candidate phase parameters

1102: The base station and the UE determine an indication value sequence through signaling interaction, and the indication value sequence includes a plurality of selection indication values

1103: The UE determines a first phase parameter in each time period from a plurality of candidate phase parameters based on each of the plurality of selection indication values, and generates a time-varying energy supply signal based on the first phase parameter in each time period

1104: The UE sends the time-varying energy supply signal to the tag

1106: The base station receives the first signal

1105: PSK Modulation

1107: The base station determines a second phase parameter in each time period from a plurality of candidate phase parameters based on each of the plurality of selection indication values, and generates a time-varying second signal based on the second phase parameter in each time period

1108: The base station obtains a channel estimation value based on a sample value of a first signal within a first time duration, a shared information, and a second parameter of the time-varying second signal within the first time duration

1109: The base station processes the first signal based on the channel estimation value and the time-varying second signal to obtain data reported by the tag

# FIG. 11

**FIG. 12**

UE

tag

Air interface signaling

Time-varying energy supply signal

Reflected signal

Eavesdropped signal

Base station

Eavesdropper

**FIG. 13**

First device

First communication unit 1401

**FIG. 14**

Second device

| | |
|---|---|
| Second communication unit 1501 | Second processing unit 1502 |

**FIG. 15**

Third device

Third communication unit 1601

**FIG. 16**

Third device

| | |
|---|---|
| Third communication unit 1601 | Third processing unit 1602 |

**FIG. 17**

**FIG. 18**

**FIG. 19**

Communication system 2000

Third device — 2010    First device — 2020

Second device — 2030

**FIG. 20**

## INTERNATIONAL SEARCH REPORT

| International application No. |
|---|
| **PCT/CN2023/070919** |

### A. CLASSIFICATION OF SUBJECT MATTER

H04W12/00(2021.01)i

According to International Patent Classification (IPC) or to both national classification and IPC

### B. FIELDS SEARCHED

Minimum documentation searched (classification system followed by classification symbols)

IPC: H04L, H04W, G06F, G06B

Documentation searched other than minimum documentation to the extent that such documents are included in the fields searched

Electronic data base consulted during the international search (name of data base and, where practicable, search terms used)

WPABS; CNTXT; CNKI; ENTXT; 3GPP: 供能, 驱动, 激励, 载波, 使能, 不同, 时变, 零功耗, 无源, power supply, driv+, excitat+, carrier, differen+, time 1w varying, zero power consumption, passive, (H04 OR G06/IC)

### C. DOCUMENTS CONSIDERED TO BE RELEVANT

| Category* | Citation of document, with indication, where appropriate, of the relevant passages | Relevant to claim No. |
|---|---|---|
| Y | CN 107786255 A (HUAWEI TECHNOLOGIES CO., LTD.) 09 March 2018 (2018-03-09) description, paragraphs 243-313 | 1-93 |
| Y | WO 2022222627 A1 (GUANGDONG OPPO MOBILE TELECOMMUNICATIONS CORP., LTD.) 27 October 2022 (2022-10-27) description, paragraphs 230-387 | 1-93 |
| Y | WO 2023272442 A1 (GUANGDONG OPPO MOBILE TELECOMMUNICATIONS CORP., LTD.) 05 January 2023 (2023-01-05) description, paragraphs 79-369 | 1-93 |
| A | WO 2015112533 A1 (QUALCOMM INC.) 30 July 2015 (2015-07-30) entire document | 1-93 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2023** | **11 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/070919** |

| Patent document cited in search report | | | Publication date (day/month/year) | Patent family member(s) | | | Publication date (day/month/year) |
| --- | --- | --- | --- | --- | --- | --- | --- |
| CN | 107786255 | A | 09 March 2018 | WO | 2018041001 | A1 | 08 March 2018 |
| WO | 2022222627 | A1 | 27 October 2022 | | None | | |
| WO | 2023272442 | A1 | 05 January 2023 | | None | | |
| WO | 2015112533 | A1 | 30 July 2015 | EP | 3097729 | A1 | 30 November 2016 |
| | | | | BR | 112016016836 | A2 | 08 August 2017 |
| | | | | JP | 2017503456 | A | 26 January 2017 |
| | | | | JP | 6193511 | B2 | 06 September 2017 |
| | | | | KR | 20160111398 | A | 26 September 2016 |
| | | | | KR | 101773761 | B1 | 01 September 2017 |
| | | | | US | 2015208368 | A1 | 23 July 2015 |
| | | | | US | 9467957 | B2 | 11 October 2016 |

Form PCT/ISA/210 (patent family annex) (July 2022)